# EUROPEAN PATENT APPLICATION

(11) **EP 4 759 177 A2**
(43) Date of publication of application: **17.06.2026**
(21) Application number: 25223280.6
(22) Date of filing: 15.12.2025
(51) Int. Cl.: A42B 3/30

(54) **DISPLAY DEVICE MOUNTING SYSTEM WITH A RAIL**

(30) Priority: 16.12.2024 US 202463734534 P
(71) Applicant: Galvion Ltd., Portsmouth, NH 03801 (US)
(72) Inventor: BAKER, JR., James, Seabrook (US)
(74) Representative: Abel & Imray LLP

(57) **Abstract**

An accessory mounting system is attachable to a helmet. The accessory mounting system is operable for positioning an accessory device, for example a display device, for example a heads-up display (HUD) device, in front of an eye of the user. The accessory mounting system includes an accessory assembly including an accessory device, for example a viewing device. The accessory assembly is attachable to a rail with a safety release mechanism that releases the rail from the rail carrier when greater than a threshold amount of force is applied to the rail. An adjustment frame of the accessory assembly is coupled to the rail and is slidable along the rail to position the accessory device. The adjustment frame includes a locking knob with protrusions that engage with compliant protrusions of the rail to selectively position the adjustment frame along the rail and to maintain the adjustment frame in a selected position.

## Description

### Cross-Reference To Related Applications

This application claims the benefit of priority of U.S. Provisional Application No. 63/734,534 filed on December 16, 2024, the disclosure of which is incorporated herein by reference in its entirety.

### 1 Copyright Notice

A portion of the disclosure of this patent document may contain material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice shall apply to this document: Copyright ^{©} 2024 - 2025 Galvion Ltd.

### 2 Background of the Invention

### 2.1 Field of the Invention

The present disclosure relates to adjustable connectors for a helmet-mounted accessory and to heads-up display systems.

### 2.2 Background

The degrees of freedom of a rigid body refers to the number of independent movements it has, minus any constraints upon movement placed upon the body. For example, a rigid body in three-dimensional space without any restrictions on its movement has six degrees of freedom. Three of the degrees of freedom are translational and allow movement of the body along x, y and z axes, in Cartesian coordinates, while the other three are rotational around each of the axes.

Heads-up display (HUD) devices are computing devices that include display screens. The display screens display information to individuals and are positioned within fields of view of the individuals. In one example, the HUD devices are mounted to helmets worn by the individuals. The individuals wearing the HUD devices are also known as users of the HUD devices. Video images to be displayed onto a display screen are generated by or received from one or more data processing devices.

A HUD device may be mounted to a helmet or other head gear worn by a user. A helmet-mounted accessory connector may be provided between the helmet and a HUD device to mechanically attach the HUD device to the helmet and to adjust the position of the HUD display screen to position the HUD display screen to a desired operating position in the field of view of the user.

Helmet-mounted HUD devices may include a transparent display or an opaque display that blocks at least a portion of a user's view of an environment surrounding the user. HUD transparent display screen devices are used to display information in the field of view of a user while still allowing the user to look through the HUD transparent display screen to view objects in the field of view beyond the transparent display screen. However, the user may elect not to use the HUD display screen in all situations, especially when the displayed information is not needed. However, conventional mechanical helmet-mounted accessory connectors lack a convenient and user-friendly attaching arrangement for quickly and easily moving the HUD device out of the field of view of the user when the HUD device is not in use and then quickly and easily moving the HUD device back into the field of view when the displayed information is needed.

In practice, moving a HUD device into an operating position is difficult because the operating location and orientation of the HUD device is limited to a very small region associated with comfortable viewing by the user and preferably the user should choose the operating position. Moreover, there can be instances when a user needs to install the HUD display screen into the operating position or remove the HUD display screen from the operating position while the user is preoccupied, e.g. while driving or piloting a vehicle, vessel, or aircraft; while carrying other equipment, e.g. a weapon, radio, medical kit, tool kit, or the like; or while working in various emergency situations, e.g. in a battle, a fire zone, a medical emergency, a public safety emergency, a police emergency, and the like.

The HUD display device can include a wired connection to another device, for example to a computing device that provides information for display on the HUD device. The wire connection may limit movement of the HUD device with respect to an attachment point of the wire connection to the HUD device.

The technology herein has applications in the areas of HUD devices and other viewing devices that may be attached to a head-worn structure such as a helmet for providing visual information to a wearer of the head-worn structure.

### 3 Summary of the Invention

The existing systems for mounting HUD devices and other helmet-borne accessories, including, but not limited to, other viewing devices, have limitations, some of which are solved by the inventive concepts disclosed herein. In one example, the inventive technology includes an adjustable accessory mounting system, for example an adjustable HUD mounting system, that is positioned on a front side portion of a helmet, in some embodiments near a front portion of a side rail of a helmet, the side rail for mounting one or more accessories onto the helmet, without blocking access to the side rail. This is advantageous in that the inventive accessory mounting system does not interfere with accessories mounted on the helmet using means other than the inventive accessory mounting system, for example with accessories mounted on the side rail. In addition, the inventive accessory mounting system does not block or otherwise interfere with a front mounting location on a helmet, for example with a front mount or shroud and with accessories such as night vision goggles, visors, or other accessories that may be mounted on the front mount or front shroud. A HUD device attached to a helmet using the inventive accessory mount system may be used in conjunction with other viewing or related accessories, for example with eyewear, visors, and night vision devices.

In an example, the inventive accessory mounting system may be attached to a helmet without using tools and may be attached to a helmet or other headgear that does not include a side rail or other accessory mounting device. In this manner, the technology described herein may provide a stand-alone accessory mounting system with toolless attachment.

In another example, the inventive accessory mounting system includes cable management features, for example grooves or cavities to hold a cable that interfaces with a HUD device or other powered accessory device mounted on a helmet using the accessory mounting system. In some embodiments, an inventive helmet system according to the technology disclosed herein includes other cable management features, for example a cable clip attachable to a front portion of the helmet or on a front mount location of the helmet system for managing a HUD cable that extends across a front portion of a helmet. The cable management features of the technology disclosed herein provide advantages including reducing cable snag potential and keeping cables away from a user's face.

Embodiments of the inventive accessory mounting system include features that enable positioning of an accessory device, for example a HUD device, in front of a user's eye or in a stowed position wherein the accessory mounting system does not interfere with a user's peripheral vision or interfere with other accessories that may be mounted to the helmet. In this manner the HUD mounting system can be configured to position a HUD device relative to a user's eye when additional accessories are mounted on a helmet, for example to provide full functionality of the HUD device around a gas mask or visor, for example around a ballistic protection visor or ballistic protection glasses. In addition, the HUD mounting system can be configured to position the HUD mounting device in front of an additional accessory or behind the additional accessory, i.e. between the additional accessory and the user's eye.

Exemplary embodiments of the technology described herein include a helmet system that includes a helmet shell an accessory mounting system that attaches to the helmet shell. The accessory mounting system includes a rail structure having a rail carrier and an accessory rail, wherein the rail carrier is attached to the helmet shell and the accessory rail is held within the rail carrier at a threshold amount of holding force. The helmet accessory subsystem also includes an accessory assembly with an adjustment frame that may be coupled to the accessory rail and an accessory coupled to the adjustment frame. When a force is applied to the accessory assembly with a magnitude greater than the threshold amount of holding force, the rail and the accessory assembly are configured to break away as a unit from the rail carrier.

In at least one embodiment, the carrier body includes a first rail lock and a second rail lock located at opposing ends of the carrier body along a length of the carrier body, and the left rail lock and the right rail lock each include a deformable element for urging the left rail lock and the right rail lock into a locked configuration to hold the carrier rail within the carrier body at the threshold amount of holding force when the left rail lock and the right rail lock are in the locked configuration.

In at least one embodiment, the left rail lock and the right rail lock are configured to rotate around pins that are vertically arranged with respect to the carrier body, and the rail disengages from the carrier body when the left rail lock and the right rail lock are rotated with respect to their pins into an unlocked position.

In at least one embodiment, the rail includes a left stop located near a left end of the rail and a right stop located near a right end of the rail, and the left and right stops protrude outwards from a front of the rail and limit travel of the carrier rail connector therebetween.

Exemplary embodiments of the technology described herein include an accessory connection system configured to be mounted on a helmet shell, wherein the accessory connection system includes a rail, a rail connector body attached to the rail, an accessory device attached to the rail connector body, and a carrier body mounted on the helmet shell. The carrier body is for removably receiving the rail, wherein the rail is configured to detach from the carrier body when greater than a threshold amount of force is applied to the accessory device.

In at least one embodiment, the accessory device includes an arm having a first end and a second end, wherein the first end is attached to the accessory device and the second end is attached to the rail connector body. The first end of the arm may be attached to the accessory device at a first ball joint for enabling movement of the accessory device relative to the arm and the second end of the arm may be attached to the rail connector by a second ball joint for enabling movement of the accessory arm relative to the rail connector body.

In at least one embodiment, the rail is configured to detach from the carrier body when a force having a magnitude of 40 pounds or greater is applied to the accessory.

Exemplary embodiments of the technology described herein include a helmet accessory subsystem for a helmet, the helmet accessory subsystem including an accessory carrier including a carrier body and a carrier rail, wherein the carrier body is attached to a helmet rail of the helmet, and wherein the carrier rail is held within the carrier body at a threshold amount of holding force. The helmet accessory subsystem includes an accessory assembly including a rail connector body, wherein the rail connector body is configured to removably attach to the rail of the accessory carrier, and a breakaway unit that includes the accessory carrier and the accessory assembly. When a force is applied to the breakaway unit with a magnitude greater than the threshold amount of holding force, the breakaway unit is configured to disengage from the accessory carrier and thus from the helmet.

In some aspects, a helmet mounting system includes a rail carrier configured to clip onto a rim of a helmet and remain semi-permanently attached thereto, a rail configured to be releasably coupled to the rail carrier, the coupling including a safety release mechanism that disengages the rail from the rail carrier when a force applied to the rail exceeds a threshold amount, an adjustment frame slidably disposed along the rail, the adjustment frame including a locking knob having protrusions that engage with compliant protrusions of a deformable insert disposed along the rail to selectively secure the adjustment frame in a position, and a display device having a viewing screen coupled to the adjustment frame, the display device positionable to dispose the viewing screen in front of a user's eye.

In some aspects, the helmet mounting system includes an arm coupled to the adjustment frame via a ball joint and further coupled to the display device via another ball joint, the arm being positionable to locate the viewing device in front of the user's eye or in a stowed position outside of the user's line of sight. In some aspects, the ball joints each include a resistance adjustor to constrain motion of the ball joint for maintaining the HUD device in a user-selected position.

In some aspects, the locking knob protrusions disengage from the compliant protrusions of the deformable insert when the locking knob is actuated by a user or when a greater than a threshold amount of force is applied to the adjustment frame or to the display device.

In some aspects, the adjustment frame is configured to slide along the rail when the user operates the locking knob.

In some aspects, the rail carrier is configured to clip onto the rim of the helmet without tools.

In some aspects, a deformable member may be disposed between the rail carrier and the helmet, wherein the rail carrier is maintained on the helmet rim with an interference fit between the deformable element, the rail carrier, and the helmet. In some aspects, the deformable member includes at least one adhesive layer to adhere the deformable member to one or more of the helmet and the rail carrier.

In some aspects, the rail includes a cavity for receiving the deformable insert and wherein the deformable insert is configured to be assembled into the cavity.

In some aspects, the safety release mechanism includes a first locking member disposed to releasably hold a first end of the rail and a second locking member disposed to releasably hold a second end of the rail.

In some aspects, the safety release mechanism further includes a first compressible element for holding the first locking member in a locked position and a second compressible element for holding the second locking member a locked configuration, wherein when the first and second locking members are in the locked configuration, the accessory rail remains coupled to the rail until a force applied to the rail exceeds the threshold amount. In some aspects, the force applied to the rail is applied to the rail through an accessory assembly attached to the rail, the accessory assembly including the adjustment frame, the arm, and the viewing device.

In some aspects, method for attaching a viewing device to a helmet includes providing a rail carrier, the rail carrier attachable to the helmet, the rail carrier including a safety release mechanism for coupling a rail to the rail carrier and for disengaging the rail from the rail carrier when a force applied to the rail exceeds a threshold amount. The method can include providing a breakaway assembly including the rail and an accessory assembly, the accessory assembly including an adjustment frame attachable to the rail and slidable along the rail, the adjustment frame including a locking knob having protrusions that engage with protrusions disposed along the rail to selectively secure the adjustment frame in a position. In embodiments, the breakaway assembly is removably attachable to the to the rail carrier to attach the viewing device to the helmet.

In some aspects, the method includes providing the viewing device and an arm, the arm attachable to the adjustment frame at a first ball joint and attachable to the viewing device at a second ball joint for coupling the viewing device to the adjustment frame.

In some aspects, the rail carrier is attachable to a rim of the helmet with an interference fit with the rim.

In some aspects, a helmet mounting system includes a rail carrier attachable to a helmet, a rail configured to be releasably coupled to the rail carrier, the coupling including a locking member that couples the rail to the rail carrier and that disengages the rail from the rail carrier when a force applied to the rail exceeds a threshold amount, an adjustment frame slidably disposed along the rail, the adjustment frame including a locking knob having protrusions that engage protrusions disposed along the rail with an interference fit to selectively secure the adjustment frame in a position, and a viewing device and a member for coupling the viewing device to the adjustment frame.

In some aspects, the member for coupling the viewing device to the adjustment frame is for selectively positioning the viewing device within a line of sight of a user and in a stowed position out of the line of sight of the user.

In some aspects, the protrusions disposed along the rail are formed from a compliant material.

In some aspects, the locking member comprises a first locking member for releasably holding a first end of the rail and a second locking member for releasably holding a second end of the rail.

In some aspects, the helmet mounting system includes the helmet.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### 4 Brief Description of the Drawings

In the accompanying drawings, reference characters refer to the same parts throughout the different views. The drawings are not necessarily to scale; emphasis has instead been placed upon illustrating the principles of the invention. The features of the present invention will best be understood from a detailed description of the invention and example embodiments thereof selected for the purposes of illustration and shown in the accompanying drawings in which:
Fig. 1 is a block diagram of a helmet system including an accessory mounting system;
Fig. 2 is a schematic diagram of an exemplary helmet system with an accessory mounting system constructed in accordance with principles of the technology disclosed herein;
Fig. 3 is an exploded perspective view of the rail mounting structure of the helmet accessory system of Fig. 2;
Fig. 4 is a schematic diagram of the accessory mounting system in Fig. 2;
Fig. 5 is schematic diagram of the accessory mounting system as in Fig. 3, where the accessory assembly and the accessory rail are collectively shown in a breakaway configuration;
Fig. 6 is a schematic diagram showing a rear view of the attached accessory assembly in Fig. 4;
Fig. 7 is a top section view of the rail carrier and accessory rail shown in Fig. 6, taken through section line 7 of Fig. 6;
Fig. 8 is a rear exploded perspective view of a rail mounting assembly, which illustrates components that enable the rail carrier to removably hold an accessory rail within the rail carrier at a threshold amount of holding force;
Fig. 9 is an exploded view of the accessory mounting system in Fig. 3, where the view shows more detail for components of the accessory assembly including the accessory mounting system accessory device;
Fig. 10 is a rear exploded view of the accessory mounting system in Fig. 9; and
Fig. 11 is a rear view of the accessory mounting system in Fig. 9, where the view shows more detail for an arm component of the accessory assembly;
Fig. 12 is a schematic perspective view of a second helmet system including a second accessory mounting system constructed in accordance with principles of the technology disclosed herein, the second helmet system worn by a user;
Fig. 13 is perspective view of the second helmet system shown in Fig. 12;
Fig. 14 is a front perspective view of the second accessory mounting system shown in Fig. 12;
Fig. 15 is a rear perspective view of the second accessory mounting system shown in Fig. 12;
Fig. 16 is a front view of an arm component of an accessory assembly of the second accessory mounting system shown in Fig. 12;
Fig. 17 is a front exploded view of the second accessory mounting system shown in Fig. 12;
Fig. 18 is a rear exploded view of the second accessory mounting system shown in Fig. 12;
Fig. 19A is a perspective view showing assembly of the second accessory mounting system shown in Fig. 12 onto a helmet shell with multiple compliant interface members;
Fig. 19B is a perspective view showing assembly of the second accessory mounting system shown in Fig. 12 onto a helmet shell with a single compliant interface member;
Fig. 19C is a perspective view showing the second accessory mounting system shown in Fig. 12 assembled onto a helmet shell;
Fig. 20A is a section view of a portion of the second accessory mounting system shown in Fig. 12, taken through second line 20 - 20 of Fig. 14;
Fig. 20B is a detail view of the second view of Fig. 20A, indicated by callout 20B in Fig. 20A;
Fig. 21A is a perspective view of a helmet system showing the second accessory mounting system of Fig. 12 in a position out of a line of sight of a user;
Fig. 21B is a perspective view of the helmet system of Fig. 21A showing the second accessory mounting system of Fig. 12 in a stowed position.

### 5 Description of Some Embodiments of the Invention

### 5.1 Detailed Description of the Invention

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

As used herein, the term "and/or" includes any and all combinations of one or more of the associated listed items. Further, the singular forms of the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence of addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

### 5.1.1 First exemplary accessory mounting system

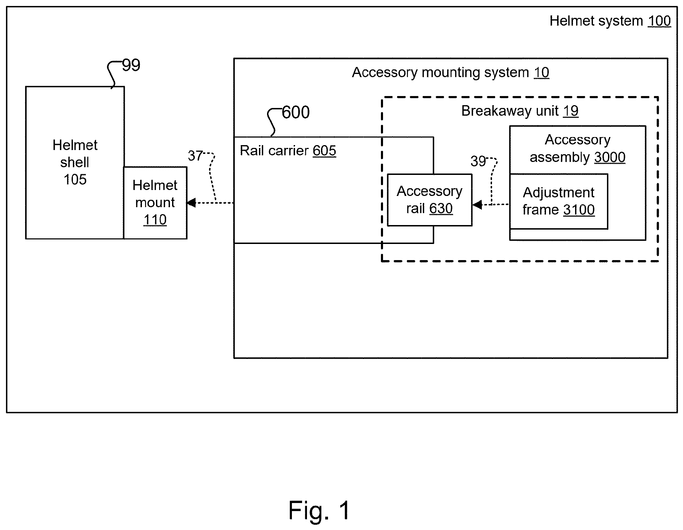

Fig. 1 is a block diagram of the helmet system 100 illustrating various components. These components include a first helmet 99, having a helmet shell 105, a helmet mount 110, and an accessory mounting system 10. In at least one embodiment, the helmet mount includes a helmet rail, for example a rail having a dovetail slot, a Picatinny rail, or any other known helmet mount. In embodiments, the accessory mounting system 10 includes an assembly for mounting an accessory device on a helmet, for example for mounting a viewing device, e.g., a heads up display (HUD) device, on the helmet. The accessory mounting system 10 includes a first embodiment of a rail mounting assembly 600 and a first embodiment of an accessory assembly 3000. The first rail mounting assembly 600 includes a rail carrier 605 and a first embodiment of an accessory rail 630, and the first accessory assembly 3000 includes a first embodiment of an adjustment frame 3100.

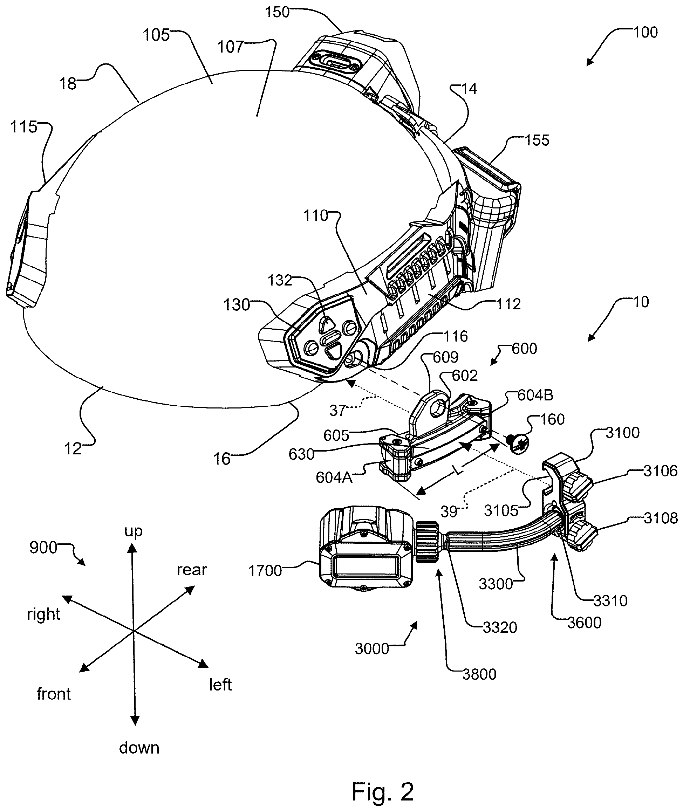

Referring now to Fig. 2, the helmet system 100 includes the accessory mounting system 10, which may include an accessory device mounting arrangement, for example including a group of components that may be configured or arranged together to attach an accessory device, for example a HUD device or other type of viewing device, to an object, for example to a helmet. As used herein, "HUD" may refer to a HUD device, for example a device that includes a heads up display screen or system or more generally a display device, e.g. a device for displaying visual information, for example texts or images. In at least one embodiment, a HUD device may include an opaque display device that obscures from view at least a portion of an environment surrounding a user from when the HUD device is disposed in a line of sight of the user. In at least one other embodiment, a HUD device may include a transparent display upon which information is projected and through which a user may view at least a portion of the environment surrounding the user. A transparent HUD device may be useful, for example, for displaying augmented reality (AR) information or other data overlaid on a view of the surrounding environment.

Directional axes 900 indicate an up direction, down direction, left direction, right direction, front direction, and rearward direction which correspond to an up direction, down direction, left direction, right direction, forward direction, and rearward direction for a user on which helmet system 100 is mounted. The accessory mounting system 10 is operable by a user to dispose an accessory device 1700 comprising a viewing device in front of the user's eye and to adjust a tilt angle of the viewing device relative to the user's line of sight to enable proper viewing of information displayed on the viewing device.

In a particular embodiment, the accessory device 1700 is a heads-up display (HUD) device including an opaque display or a transparent display screen, and may include a waveguide device. The user can adjust the accessory mounting system 10 to position the screen of the HUD device in front the user's eye at a desirable distance from the user's eye and at a desired angular orientation relative to the user's eye, described herein as an operating position. The accessory mounting system 10, in one or more embodiments, may more generally be implemented as a helmet accessory system, or helmet accessory subsystem, for mounting an accessory device 1700 other than a viewing device such as a HUD device on the helmet system 100. In a still further embodiment, the accessory mounting system 10 may be used to mount two or more accessory devices to the helmet system 100, for example to mount a HUD device 1700 along with a second accessory (not shown), for example an illumination device or imaging device.

The first helmet system 100 includes the helmet shell 105, which in embodiments includes a ballistic or non-ballistic (e.g., bump) helmet shell wherein a ballistic helmet shell refers to a helmet shell configured to resist penetration of a projectile. The helmet shell 105 has an outer surface 107. The first helmet mount 110 and a second helmet mount 115 are each mounted on the outer surface 107. In some embodiments, the first helmet mount 110 and second helmet mount 115 are mounted on opposing sides of the helmet shell 105. The first and second helmet mounts 110 and 115 may be for attaching one or more accessory devices to the helmet system 100 and each include a rail, for example a dovetail rail or a Picatinny rail for attaching the one or more accessories.

As to the helmet shell 105, with respect to a directional axes 900, a front 12 of the helmet shell 105 faces the viewer, a rear 14 portion of the helmet shell 105 opposes the front portion, the first helmet mount 110 is attached to a left side 16 of the helmet shell 105 and the second helmet mount 115 is attached to a right side 18 of the helmet shell 105. The first and second helmet mounts 110 and 115 may be attached to the helmet shell 105 using one or more fasteners, for example one or more threaded fastener 160. Each helmet mount 110 and 115 includes one or more rail slots, for example rail slot 112 of helmet mount 110, for attaching one or more accessory devices (not shown) to the helmet system 100. In some embodiments, the rail slots 112 include dovetail-shaped slots, as is known in the art.

The first helmet system 100 may include a suspension system (not shown) attached to the helmet shell 105 for holding the helmet system 100 on the head of a user. In some embodiments the suspension system includes a fit system for adjusting a fit of the first helmet system 100.

The helmet system 100 includes a rear control module (RCM). A power module 155 may be removably attachable to the RCM 150. In some embodiments the power module 155 includes a battery or a module containing one or more power sources, for example one or more batteries, chemical energy production devices, fuel cells, or the like. In some embodiments the power module 155 includes a processor, for example for monitoring a power capacity or state of charge of one or more power sources of the power module 155 and for communicating information to the RCM 150 or to another device.

In some embodiments, the RCM 150 may be optional. The helmet system 100 may comprise a power module 155 for providing power to the accessory device 1700 wherein the power module 155 is removably or fixedly attached to the helmet shell 105 or otherwise ported by a user. In some embodiments the power module 155 is optional, for example in an embodiment wherein the accessory device 1700 includes an internal power source.

In exemplary embodiments the RCM 150 and power module 155 are disposed on a rear portion 14 of the outer surface 107 of the helmet shell 105, although they may be disposed in another location on the helmet shell 105 without departing from the inventive technology disclosed herein. In some embodiments the RCM 150 is disposed on the outer surface 107 while in some other embodiments the RCM 150 extends at least partially through the outer surface 107 and the helmet shell 105. In at least one embodiment, the power module 155 may be removably attachable to the RCM 150 while in one or more other embodiments the power module may be fixedly attached to the RCM or contained therein. The RCM 150 includes a processor and associated memory (not shown) and is configured to receive data, process data, send data, and provide power to one or more electronic devices and/or device controllers of the helmet system 100.

The helmet system 100 includes an accessory control interface 130, with a plurality of buttons 132 for controlling one or more aspects of operation of the accessory device 1700. The accessory control interface 130 may be mounted on or exposed through a front side portion of the outer surface 107 of the helmet shell 105, for example on a front left portion of the helmet shell. In some embodiments, the accessory control interface 130 is mounted on or near the first helmet mount 110, for example at a front or forward portion of the first helmet mount, wherein the front portion of the first helmet mount is positioned near a front side portion of the helmet, for example on a front left portion of the helmet shell 105. The accessory control interface 130 is electrically connected to the RCM 150 via a cable (not shown) which may be clipped to or disposed under or within a cavity of the first helmet mount 110. In alternative embodiments, the accessory control interface 130 may be mounted on another portion of the helmet shell, for example on a right side of the helmet shell 105 or may be separate from the helmet shell 105, for example as part of a hand-held or torso-mounted controller. In other embodiments, the accessory control interface 130 may be optional and may not be present.

A user can actuate one or more of the buttons 132 to cause the accessory control interface 130 to send control and command signals to the RCM 150. In response to receiving one or more control and/or command signals from the accessory control interface 130, the RCM may send command or control signals to the accessory device 1700 or alter one or more aspects of information communicated to the accessory device 1700, for example information to be displayed on a viewing screen of the HUD device comprising the accessory device 1700. It is noted that accessory control interface 130 may function as a HUD device control interface and, in at least one embodiment, alternatively or in addition as a control interface for one or more additional or alternative accessory devices; for example, for one or more of a speaker, audio communication system, sensor, signal generator, camera, or night vision system.

The helmet mount 110 attaches to an outer surface 107 of the helmet shell 105, and the accessory mounting system 10 attaches to the helmet mount 110, i.e. the first rail mounting assembly 600 is attached to the helmet mount 110. The attachment of the accessory mounting system 10 to the helmet mount 110 is indicated by reference 37. In embodiments, the helmet mount 110 is an optional component of the helmet system 100. In at least one alternative embodiment, the first rail mounting assembly 600 attaches directly to the helmet shell 105 instead of the helmet mount 110. The first adjustment frame 3100 of the first accessory assembly 3000 removably attaches to the first accessory rail 630 of the first rail mounting assembly 600 (indicated by reference 39).

The first rail mounting assembly 600 holds the first accessory rail 630 within the rail carrier 605 at a threshold amount of holding force. For this purpose, the rail carrier 605 includes a safety release mechanism that includes locking members 604A and 604B held under spring tension that hold the first accessory rail 630 within the rail carrier 605 at the threshold amount of holding force.

The first accessory rail 630 and the first accessory assembly 3000 are additionally configured as a breakaway unit 19. When an amount of force is applied to the first accessory assembly 3000 that pulls the first accessory assembly 3000 in a direction away from the helmet shell 105, and a magnitude of the force exceeds the threshold amount of holding force with which the first accessory rail 630 is held within the rail carrier 605 by the locking members 604A and 604B, the breakaway unit 19 disengages from the first rail mounting assembly 600. As a result, the breakaway unit 19 separates from the helmet system 100.

The breakaway unit 19 is designed to disengage from the first rail mounting assembly 600 when an obstruction or object entangles with components of the accessory mounting system 10, for example, when the individual wearing the helmet system 100 is moving but does not perceive the entanglement. The ability of the breakaway unit 19 to break away from the helmet system 100 may limit damage to the first accessory assembly 3000 and can minimize injury to the individual wearing the helmet system 100 under these conditions.

The accessory mounting system 10 includes the first rail mounting assembly 600 and the first accessory assembly 3000. In the illustrated example, the first accessory assembly 3000 includes an accessory device 1700. In example embodiments, the first accessory assembly 3000 is a heads up display (HUD) device mounting system for attaching an accessory device 1700 that includes a HUD device.

The first rail mounting assembly 600 has a rail carrier 605. The rail carrier 605 includes an attachment flange 609 and left and right locking members 604A and 604B, respectively. The first rail mounting assembly 600 includes the first accessory rail 630 removably attached to the first rail carrier 605 and held therein by the left and right locking members 604A and 604B which together form an embodiment of the safety release mechanism.

The first accessory assembly 3000 includes the first adjustment frame 3100 and an accessory device 1700. Here, the accessory device is a HUD device 1700. An arm 3300 connects the accessory device 1700 to the first adjustment frame 3100. The first adjustment frame 3100 includes a rail locking actuator 3106 and an arm locking actuator 3108. The rail locking actuator 3106 and arm locking actuator 3108 may each include a threaded fastener, for example a thumb knob or set screw, or any suitable device for applying compressive force, for example a spring-loaded actuator such as a spring detent or the like.

The components of the accessory mounting system 10 are arranged as follows. The first rail mounting assembly 600 attaches to an attachment hole 116 of the helmet shell 105 via a fastener 160, which may include a threaded fastener. For this purpose, the fastener 160 passes through a hole 602 in the attachment flange 609 of the first rail carrier 605 of the first rail mounting assembly 600. Reference 37 indicates the attachment of the first rail mounting assembly 600 to the first helmet mount 110.

In a number of embodiments, the fastener 160 is configured to attach both the first rail mounting assembly 600 and a front portion of the first helmet mount 110 to the helmet shell 105. This advantageously reduces an amount of hardware used to assemble the helmet system 100 and reduces a number of holes formed in the helmet shell 105 for assembling components of the helmet system 100 onto the helmet shell 105.

Within the first rail mounting assembly 600, the first accessory rail 630 is held within the rail carrier 605 via the locking members 604A, 604B, which are located on opposing ends of the rail carrier 605 along its length L.

With regard to the first accessory assembly 3000, the arm 3300 has a first, proximal, end 3310 that connects to the first adjustment frame 3100 at a first ball joint 3600 and second, distal, end 3320 that connects to the accessory device 1700 at a second ball joint 3800. The second end 3320 of the arm 3300 is opposed to the first end 3310. The first end 3310 pivotably connects to the first adjustment frame 3100 via a first ball joint 3600, and the second end 3320 pivotably connects to the accessory device 1700 via a second ball joint 3800.

The first adjustment frame 3100 has a rail interface 3105 formed as a channel that is designed to interface with and slide onto the first accessory rail 630. The channel of the rail interface 3105 is adapted to have an inner contour shaped to mate with an outer contour of the accessory rail 630. In the illustrated example, the channel of the rail interface 3105 is substantially C-shaped.

The rail locking actuator 3106, when loosened, allows the first adjustment frame 3100 (and thus the first accessory assembly 3000) to slide along the length L of the first accessory rail 630 to adjust the location of the accessory device 1700 relative to the first accessory rail 630. When tightened, the rail locking actuator 3106 secures the first adjustment frame 3100 to the first accessory rail 630, thus securing the first accessory assembly 3000 to the first rail mounting assembly 600.

The removable attachment of the first adjustment frame 3100 to the first accessory rail 630 is indicated by reference 39. In this way, the rail locking actuator 3106 operates as a first actuator of the first accessory assembly 3000 for locking the rail attachment body 3100 to the first accessory rail 630 of the first rail mounting assembly 600. The first rail locking actuator 3106 is adapted to lock the rail attachment body 3100 at a user-selected position along the first accessory rail 630 when the first rail locking actuator 3106 is tightened. The first tail locking actuator 3106 is adapted to allow the rail attachment body to be selectively positioned along the length L of the first accessory rail 630 when the first rail locking actuator 3106 is loosened.

In addition, the arm locking actuator 3108 secures the position of the arm 3300 at its first end 3310 relative to the first adjustment frame 3100. In this way, the arm locking actuator 3108 operates as a second actuator for locking the first end 3310 of the arm 3300 in place relative to the first adjustment frame 3100. A user may loosen the arm locking actuator 3108 to enable motion of the arm 3300 relative to the first adjustment frame 3100 for changing a position and angle of the accessory device 1700 relative to the first adjustment frame 3100 and may tighten the arm locking actuator 3108 to lock the arm 3300 in a particular position.

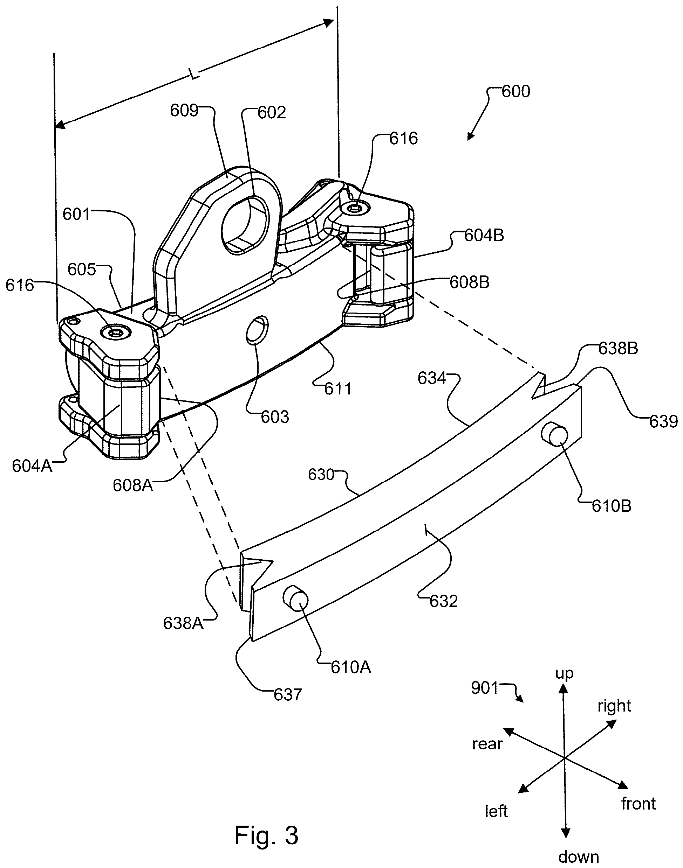

Fig. 3 depicts detail for the first rail mounting assembly 600 that could not be shown in Fig. 2. With reference to directional axes 901, the first accessory rail 630 is depicted detached / disengaged from the rail carrier 605 to illustrate a front 611 of the rail carrier 605 and a rail stabilizer receptacle 603 at its front 611, centered along the length L of the rail carrier 605. The attachment flange 609 rises upward from a top 601 of the rail carrier 605.

In the illustrated example, the first accessory rail 630 is in the form of a rigid elongated bar. The bar is slightly curved outward along its length. The bar is typically made of metal, for example aluminum or an aluminum alloy. In an embodiment, the first accessory rail 630 has a substantially square or rectangular cross sectional shape. In an alternative embodiment the cross sectional shape of the first accessory rail 630 is substantially hexagonal. The first accessory rail 630 may be formed with other cross sectional shapes in one or more embodiments. The first accessory rail 630 may be formed as a known Picatinny rail or have a cross sectional profile similar to that of a Picatinny rail. The shape of the first accessory rail 630 is not so limited and can be formed with any suitable cross-sectional shape, for example with a rectangular, rounded or partially rounded, T-shaped, or trapezoidal shape, among others.

The first accessory rail 630 has a front 632 surface, a rear surface 634, a left side 637 and a right side 639. Left stop 610A and right stop 610B protrude outward from the front surface 632 of the first accessory rail 630. The left stop 610A is located near the left side 637 while the right stop 610B is located near the right side 639. As their names suggest, the stops 610A, 610B limit a range of travel of the first adjustment frame 3100 along the length L of the first accessory rail 630.

The left locking member 604A and the right locking member 604B each rotate around vertically arranged pins 616. The pins pass through holes in a top portion of the locking members 604A, 604B and the locking members 604A, 604B rotate around their respective pins 616.

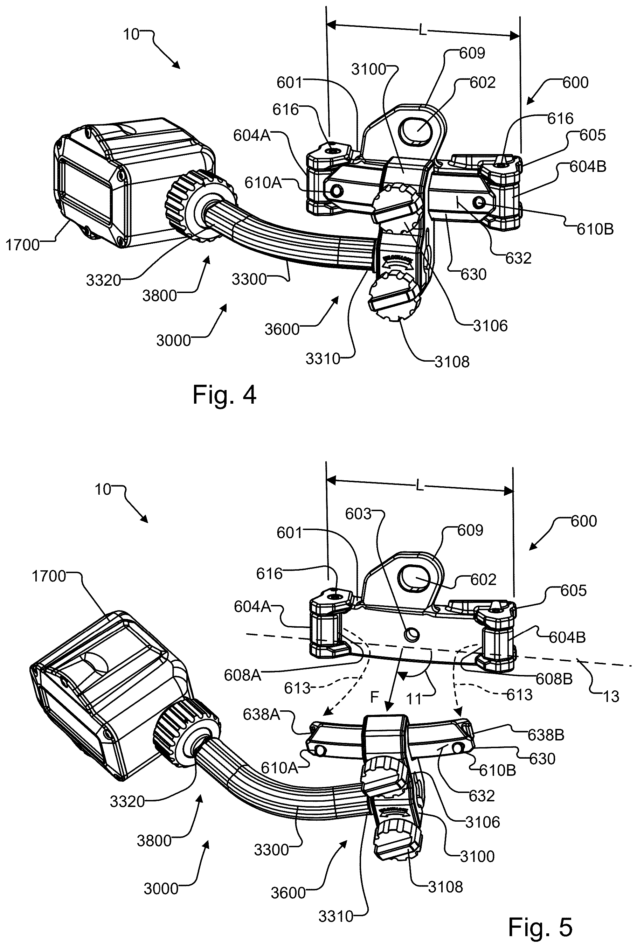

Fig. 4 depicts the first accessory assembly 3000 of the accessory mounting system 10 securely fastened to the first rail mounting assembly 600. For this purpose, the left locking member 604A and the right locking member 604B are in a locked position to hold the first accessory rail 630 within the rail carrier 605 with a threshold amount of holding force. The rail locking actuator 3106 is in a locked position to secure the first adjustment frame 3100 to the first accessory rail 630 at its front 611.

Fig. 5 depicts first accessory assembly 3000 disconnected from the first rail mounting assembly 600. In one example, the individual wearing the helmet system 100 can manually move the left and right locking members 604A and 604B outward towards the left and right sides of the rail carrier 605 to disconnect the first accessory rail 630 from being held within the rail carrier. This is indicated by arrows with reference 613.

In another example, a force (indicated by reference F) might be applied to the first accessory assembly 3000 in a direction that points away from the first rail mounting assembly 600 / in a direction outwards and away from the left side 16 of the helmet shell 105, upward relative to the helmet shell, or downward relative to the helmet shell. This can occur when the first accessory assembly 3000 is entangled with an obstruction or object, and the individual is moving but is unaware of the entanglement. The force F might be applied at an angle 11 that is perpendicular to a longitudinal plane 13 of the rail carrier 605 along its length L. The angle could also be less than perpendicular, however. When a magnitude of the force applied to the first accessory assembly 3000 exceeds the threshold holding force within which the first accessory rail 630 is held within the rail carrier 605, the first accessory assembly 3000 and its connected first accessory rail 630 break away as a unit from the first rail mounting assembly 600. In one example, the threshold amount of holding force has a range of 5 pounds to 20 pounds, and in a particular example is approximately 40 pounds.

In some embodiments, the individual may grasp a portion of the first accessory assembly 3000, for example to the arm 3300, and apply the force (F) manually. Doing so will overcome the locking force supplied by the locking members 604A and 604B for holding the first accessory rail 630 within the rail carrier 605. In this way, the individual can purposely remove the first accessory rail 630, and the first accessory assembly 3000 including the accessory device 1700 attached to the first accessory rail 630, as a unit from the rail carrier 605. This may be advantageous for enabling removal of the first accessory assembly 3000 without directly manipulating the locking members 604A and 604B.

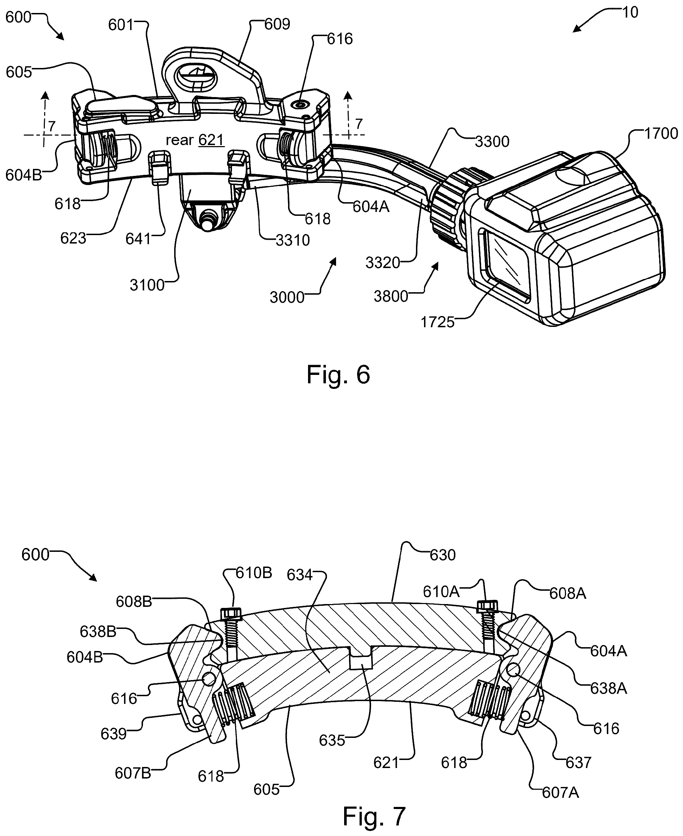

Fig. 6 depicts a rear view of the accessory mounting system 10 in Fig. 5. This view illustrates components that could not be shown in the prior figures. A rear surface 621 of the rail carrier 605 faces the viewer.

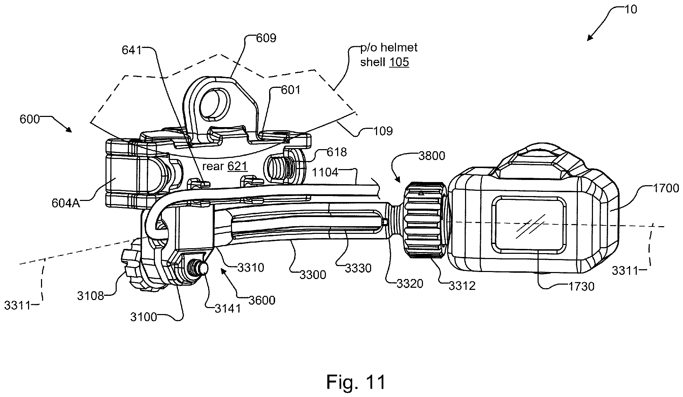

A pair of cable clips 641 are attached to the rear 621 of the rail carrier 605, located near a bottom 623 of the rail carrier 605. The arm 3300 includes an opening 3330 (see Fig. 11) that forms a channel passing from an exterior of the arm to a hollow second end 3320 of the arm. The cable clips 641 may support a power and/or data cable that connects to the accessory device 1700 and the power and/or data cable may pass through into the opening 3330, through the arm 3300, and to the accessory device 1700.

Compressible members 618, which are interfaced with the rail carrier 605 and with each of the left and right locking members 604A and 604B, are visible from the rear 621 of the body 605. In some embodiments, the compressible members 618 includes springs or other members that, when partially or wholly compressed, elastically deform to provide an urging force for holding each of the locking members 604A and 604B in a locked configuration to hold the first accessory rail 630 within the rail carrier 605 at the threshold amount of holding force, for example by urging the locking members 604A and 604B into their locked configurations.

Fig. 7 is a top section view of the first rail mounting assembly 600, taken through section line 7 of Fig. 6. This view provides more detail for the left and right locking members 604A and 604B and the compressible members 618. Also illustrated are the left and right stops 610A, 610B. Each rail locking member 604A and 604B includes a rail interface 608A and 608B, respectively, for interfacing with corresponding receptacles 638A and 638B of the first accessory rail 630 to hold the first accessory rail 630 on the rail carrier 605. Each rail locking member 604A and 604B includes an actuating interface 607A, 607B, respectively. The actuating interfaces 607A and 607B are urged into a locked configuration by compressible members 618. When the actuating interfaces 607A and 607B are in the locked configuration, the rail interfaces 608A and 608B are engaged with the receptacles 638A and 638B of the first accessory rail 630. A user can push on the actuating interfaces 607A and 607B to overcome the urging forces provided by the compressible members 618 to disengage the rail interfaces 608A and 608B from the receptacles 638A, 638B to enable removal of the first accessory rail 630 from the rail carrier 605.

The first accessory rail 630 includes a rail stabilizer boss 635 which interfaces with the rail stabilizer receptacle 603 of the rail carrier 605. This aids a user to locate the first accessory rail 630 on the rail carrier 605 when assembling the first accessory rail 630 onto the rail carrier 605 and provides stabilization of the first accessory rail 630 when it is assembled onto the rail carrier 605. In some embodiments, one or more of the rail stabilizer receptacle 603 and rail stabilizer boss 635 may include one or more of a magnet and ferromagnetic material to provide a magnetic force for helping to locate the first accessory rail 630 on the rail carrier 605 and, in some embodiments, to provide a portion of the threshold amount of holding force for maintaining the first accessory rail 630 on the rail carrier 605.

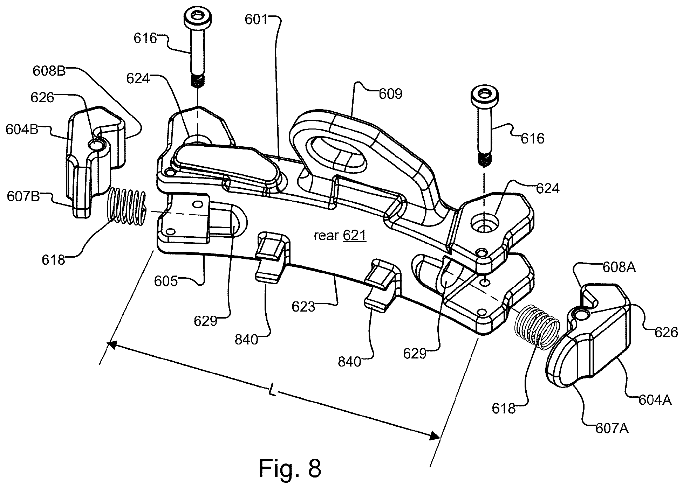

Fig. 8 depicts a rear exploded view of the first rail carrier 605. This view illustrates horizontal recesses 629 provided at opposing ends of the rail carrier 605 along its length L. To enable the left and right locking members 604A and 604B to provide the threshold amount of holding force to the first accessory rail 630, the compressible members 618 are first placed longitudinally in the recesses 629. Each pin 616 is inserted in a hole 624 at the top 601 of the rail carrier 605, and then into a hole 626 that extends vertically through each of the left and right locking members 604A and 604B. A threaded portion of the pins 616, located at a bottom of the pins, then engages with a threaded hole (not shown), located near the bottom 623 of the rail carrier 605, to rotatably secure the left and right locking members 604A and 604B to the rail carrier 605. When the left and right locking members 604A and 604B are assembled onto the rail carrier 605, the compressible members 618 are disposed between the recesses 629 and the actuating interfaces 607A and 607B to urge the left and right locking members into their locked configuration. The compressible members 618 are each disposed between a recess 629 and a corresponding locking member (604A or 604B) to apply an urging force to the corresponding locking member for urging in and maintaining the corresponding locking member in a locked configuration for holding the first accessory rail 630 on the rail carrier 605.

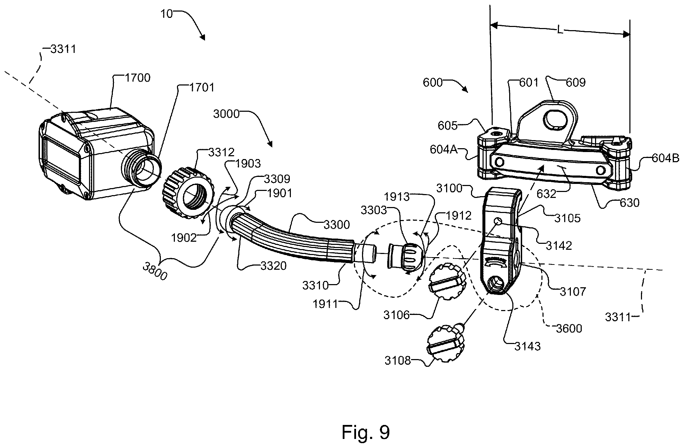

Fig. 9 depicts more detail for the first and second ball and socket joints 3600, 3800 of the first accessory assembly 3000.

The first ball joint 3600 includes a first ball 3303 disposed at the first end 3310 of the arm 3300. The first ball 3303 seats within a through hole 3107 near a bottom of the first adjustment frame 3100. The first ball 3303 has grooves formed on its surface that are designed to engage with the arm locking actuator 3108 or with an insert disposed within the through hole 3107. The first ball 3303, and the arm 3300 attached to the first ball 3303, can rotate and translate relative to the first adjustment frame 3100 as indicated by arrows 1911, 1912, and 1913. In this manner, the first ball joint 3600 provides a rotatable connection between the first adjustment frame 3100 and the arm 3300 having three rotational degrees of freedom. In at least one embodiment, one or more of the three rotational degrees of freedom may be partially or wholly constrained such that the first ball joint 3600, in some embodiments, may provide one or two, or greater than two, rotational degrees of freedom.

The second ball joint 3800 includes a second ball 3309 located at the second end 3320 of the arm 3300. The second ball 3309 enables rotation of the accessory device 1700 relative to the arm 3300 around and relative to a longitudinal axis 3311 that passes through a center of the arm 3300. In this manner, the second ball joint 3800 provides a rotatable connection between the arm 3300 and the accessory device 1700 having three rotational degrees of freedom, as indicated by arrows 1901, 1902, and 1903. In at least one embodiment, one or more of the three rotational degrees of freedom may be partially or wholly constrained such that the second ball joint 3800, in some embodiments, may provide one or two, or greater than two, rotational degrees of freedom. The second ball 3309 is captured by a knurled knob 3312, and the knurled knob also engages with a threaded portion 1701 of the accessory device 1700. A user may loosen the knurled knob 3312 to adjust a position of the accessory device 1700 relative to the second end 3320 of the arm 3300. The user may tighten the knurled knob 3312 to lock the accessory device 1700 in position relative to the second end 3320 of the arm 3300.

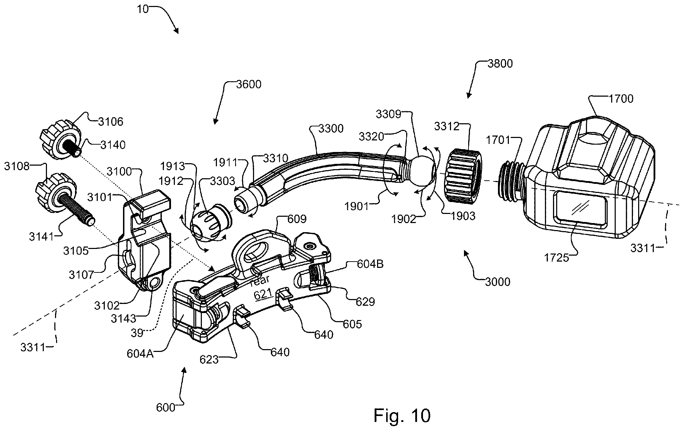

Fig. 10 is a rear exploded view of the accessory mounting system 10 in Fig. 9. This view illustrates a threaded portion 3140 of the rail locking actuator 3106 and a threaded portion 3141 of the ball locking actuator 3108. The rail interface 3105 includes a first grip 3101 and a second grip 3102 for interfacing with the first accessory rail 630.

Referring now to Figs. 4, 9, and 10, the rail locking actuator 3106 is assembled onto first adjustment frame 3100 at a first actuator mounting hole 3142. The threaded portion 3140 of the rail locking actuator 3106 engages with matching threads of the first actuator mounting hole 3142. A distal end of the threaded portion threaded portion 3140 of the rail locking actuator 3106 impinges on the front surface 632 of the first accessory rail 630 to fix a position of the first adjustment frame 3100 relative to the first accessory rail 630 when the rail locking actuator 3106 is tightened to a locked position.

The arm locking actuator 3108 is assembled onto first adjustment frame 3100 at a second actuator mounting hole 3143. The threaded portion 3141 of the arm locking actuator 3108 engages with matching threads of the second actuator mounting hole 3143. When the arm locking actuator 3108 is tightened, it tends to draw portions of the first adjustment frame 3100 towards each other to reduce an inside dimension of the through hole 3107, thereby constraining the first ball 3303 within the through hole 3107 to prevent rotation of the first ball relative to the first adjustment frame.

In an embodiment wherein the accessory device 1700 is a HUD device, the HUD device includes a viewing screen 1725 that is configured to face an eye of a user for displaying information when the accessory mounting system 10 is mounted on the helmet system 100.

A user can adjust a position of the accessory device 1700 in a number of particulars, for example to position the accessory device 1700 relative to an eye of the user so that the user can see the viewing screen 1725. The user can loosen the rail locking actuator 3106 to enable the first adjustment frame 3100 to slide along a length (L) of the first accessory rail 630, with travel of the first adjustment frame 3100 relative to the first accessory rail 630 limited by the left and right stops 610A and 610B. The user can then tighten the rail locking actuator 3106 to hold the carrier rail connector in a desired position.

The user can loosen the arm locking actuator 3108 to enable rotation and motion of the first ball 3303, and the arm 3300, relative to the first adjustment frame 3100, as indicated by arrows 1911, 1912, and 1913. The user can position the arm 3300 in a selected orientation and then tighten the arm locking actuator 3108 to maintain the arm 3300 in the selected orientation.

The user can loosen the knurled knob 3312 to enable rotation and angular movement of the accessory device 1700 relative to the second end 3320 of the arm 3300, as indicated by arrows 1901, 1902, and 1903. The user can position the accessory device 1700 in a selected position and angular orientation and then tighten the arm locking actuator 3108 and the knurled knob 3312 to lock the accessory device 1700 in a selected position and angular orientation.

Advantageously, the user can remove the first accessory assembly 3000 from the rail carrier 605, as shown in Fig. 5 and subsequently replace it on the rail carrier 605, as shown in Fig. 4. If the rail locking actuator 3106, arm locking actuator 3108, and knurled knob 3312 have remained their locked positions, the accessory device 1700 will be disposed in the selected position when the first accessory assembly 3000 is assembled back onto the rail carrier 605.

Fig. 11 depicts more detail for the arm 3300 of the first accessory assembly 3000. A channel 3330 is formed within the arm 3300 along its longitudinal axis 3311 that is configured to receive power and data cables 1104. The power and data cables 1104 originate from one or both of the power module 155 and the RCM 150, pass through the channel 3330, exit the arm 3300 at its second end 3320, and connect to the accessory device 1700. The cable clips 641 hold the power and data cables 1104 in place against the rail carrier 605. The cable clips 641 may be disposed below a lower brim (not shown) of the helmet shell 105.

### 5.1.2 Second exemplary helmet system

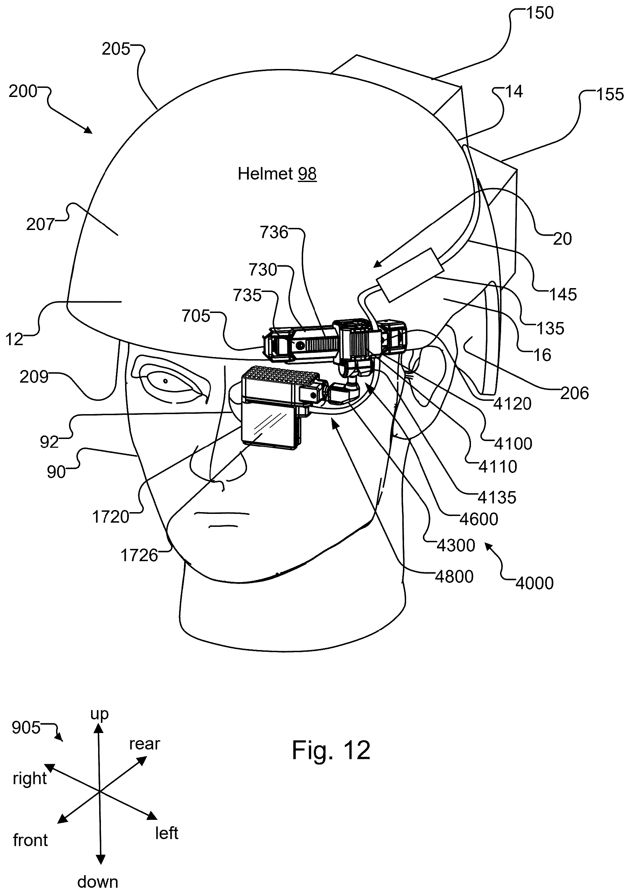

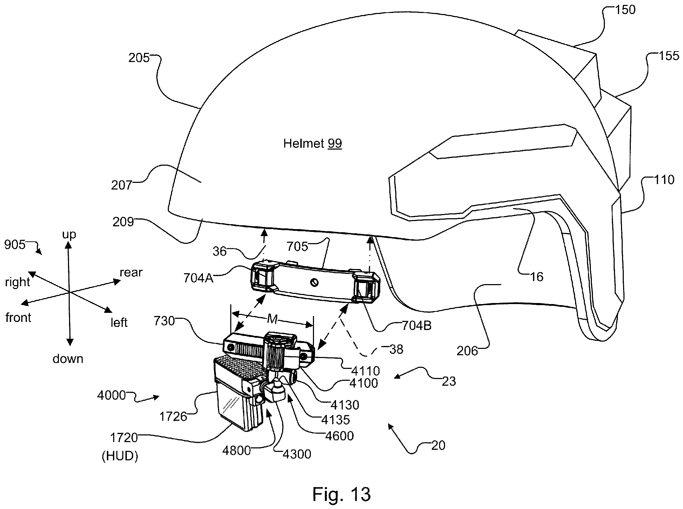

Referring to Figs. 12 and 13, a second helmet system 200 is depicted. The second helmet system 200 includes a helmet 98 with a helmet shell 205. The helmet shell 205 includes and outer surface 207, an inner surface 206, and a helmet edge or rim 209 extending between the inner surface 206 and the outer surface 207. The second helmet system 200 may be worn by a user 90.

A second accessory mounting system 20 is attached to the helmet shell 205. The second accessory mounting system 20 is similar to the first accessory mounting system 10 in a number of particulars and like elements are indicated with like identifiers. However, there are some differences.

The second accessory mounting system 20 may attach an accessory device 1720 to the helmet system 200. The second accessory mounting system 20 may be configured to position the accessory device 1720 in front of an eye 92 of the user. In some embodiments, the accessory device 1720 includes HUD device with a transparent screen 1726 that may be useful for projecting one or more augmented reality (AR) overlays including information useful to the user 90. In example embodiments, the accessory device may include, alternatively or in addition to a HUD device, another accessory device, for example one or more of a sensor, signal generator, camera, or night vision system.

The second helmet system 200 may include an RCM 150 and power module 155, as described herein in relation to Fig. 2. The RCM 150 and power module 155 may be attached to a rear 14 of the helmet shell 205. In some embodiments, one or more of the RCM 150 and power module 155 may be attached to another portion of the helmet shell 205, for example to a side 16 or top of the helmet shell. The power module 155 may be removably attachable to the RCM 150. In some embodiments, the helmet system 200 may include a helmet mount 110, for example an accessory rail disposed on the left side 16 of the outer surface 207 of the helmet shell 205 (see Fig. 13). In examples a second helmet mount (not shown) may be disposed on the right side of the helmet shell 205. However, at least one embodiment of the helmet system 200 does not include a helmet mount 110 (see Fig. 13).

An electrical conductor 145 may be disposed between the RCM 150 and the accessory device 1720 to conduct one or more of power and data signals therebetween. The electrical conductor 145 may include any suitable structure for conducting electrical signals, for example one or more electrical cables or wires, a flexible circuit board, or the like. The electrical conductor 145 may be disposed over an outer surface 207 of the helmet shell 205 and may be attached thereto with one or more clips, bungees, or the like. In some embodiments, the electrical conductor 145 may be attached to or at least partially disposed within or upon the helmet mount 110.

In at least one embodiment, the helmet system 200 does not include an RCM 150 and may include a power module 155 attached to the helmet shell 205 for providing power to the accessory device 1720. In further embodiments, the helmet system 200 may not include both the RCM 150 and the power module 155 or may include an RCM 150 without a power module 155, for example in an embodiment wherein the accessory device 1720 includes a built-in power source. In these embodiments, the electrical conductor 145 may be omitted.

The helmet system 200 may include a control interface 135 for controlling one or more aspects of operation of the accessory device 1720. In some embodiments, the control interface 135 is substantially similar to the accessory control interface 130 described herein in relation to Fig. 2. In embodiments the control interface 135 may include one or more actuators operable by a user for controlling one or more aspects of operation of the accessory device 1720, for example one or more buttons or dials.

With reference to directional axes 905, the second accessory mounting system 20 is positioned on a front 12 left 16 portion of the helmet shell 205 and is configured to position the accessory device 1720 in front of the user's left eye. It is recognized that an embodiment of the second accessory mounting system 20 may be disposed on a right side, for example on a right front portion, of the helmet shell 205 to enable positioning of the HUD device in front of the user's right eye.

The second accessory mounting system 20 includes a second rail carrier 705 which may be fixedly or removably attached to the helmet shell 205. The second accessory mounting system 20 includes a second accessory rail 730 that may be removably attached to the second rail carrier 705. The second accessory rail 730 may be removably attached to the second rail carrier 705 in a manner similar to that described in relation to the first helmet accessory subsystem 10, for example as shown in Figs. 3 through 5.

The second accessory mounting system 20 includes a second accessory assembly 4000 that may be attached to a second accessory rail 730. The second accessory assembly 4000 may include a second adjustment frame 4100 that attaches to the second accessory rail 730. The second adjustment frame 4100 is translatable along a longitudinal length M of the second accessory rail 730. An adjustment arm 4300 may be disposed between the second adjustment frame 4100 and the accessory device 1720. The adjustment arm 4300 may be connected to the second adjustment frame 4100 at a proximal ball joint 4600 and may be connected to the accessory device 1720 at a distal ball joint 4800. The proximal ball joint 4600 and distal ball joint 4800, along with translation of the adjustment frame along the second accessory rail 730, enable a user to alter a position and angle of the accessory device 1720 relative to the adjustment frame 4100 and relative to the user's eye 92.

With reference to directional axes 905, the second accessory mounting system 20 is positioned on a front 12 left 16 portion of the helmet shell 205 and is configured to position the accessory device 1720 in front of the user's left eye. It is recognized that an embodiment of the second accessory mounting system 20 may be disposed on a right side, for example on a right front portion, of the helmet shell 205 to enable positioning of the HUD device in front of the user's right eye.

The second accessory mounting system 20 may be configured and reconfigured to position the accessory device 1720, and in some embodiments the screen 1726, in one of multiple possible locations. For example, the second helmet accessory subsystem may be configured to position the accessory device 1720 in a location in front of the user's eye, out of the user's line of sight, or in a stowed position. Additionally, the second accessory mounting system 20 may be operated to change an angle of a viewing screen 1726 of the accessory device 1720 relative to the user's eye. Advantageously, the second accessory mounting system 20 is operable to position an accessory device, for example the accessory device 1720, in front of the user's eye when the user is wearing eyewear, for example glasses, spectacles, googles, or a visor. The accessory device 1720 may be positioned external to the eyewear.

### 5.1.2.1 Removable Rail

Referring now to Figs. 12 through 17 and 19A, in examples, the second accessory rail 730 is removably attached to the second rail carrier 705 with one or more locking members 704, for example 704A and 704B, also referred to herein as safety release members. Together, the second rail carrier 705 and second accessory rail 730 form a second rail mounting assembly 700. The one or more safety release members, e.g., 704A and 704B, may hold the second accessory rail 730 on the second rail carrier 705 as previously described in relation to Figs. 2 through 10 herein.

The second rail carrier 705 includes a first safety release member 704A and a second safety release member 704B which may be operable individually or together as a safety release mechanism. The first and second safety release members 704A and 704B are substantially similar in design and function to the left and right locking members 604A and 604B described in relation to Figs. 2 through 10. The first and second safety release members 704A and 704B releasably hold the second accessory rail 730 on the second rail carrier 705.

As may best be seen in Fig. 13, the second accessory assembly 4000, including the accessory device 1720, may be attached to the second accessory rail 730 which may, in turn, be removably attached to the second rail carrier 705. The second accessory assembly 4000 may thus be removably attachable to the second rail carrier 705 by removably attaching the second accessory rail 730 to the second rail carrier 705. The second accessory rail 730 and second accessory assembly 4000 assembled together may form a second breakaway unit 23, which is designed to be attached and removed from the second rail carrier 705 by a user and to release from the second rail carrier 705 when a greater than threshold amount of force is applied to the second rail 730, for example by applying a greater than threshold amount of force to any portion of the second breakaway unit 23. Removable attachment and detachment of the second accessory rail 730, and the second breakaway unit 23, from the second rail carrier 705 is indicated by reference 38.

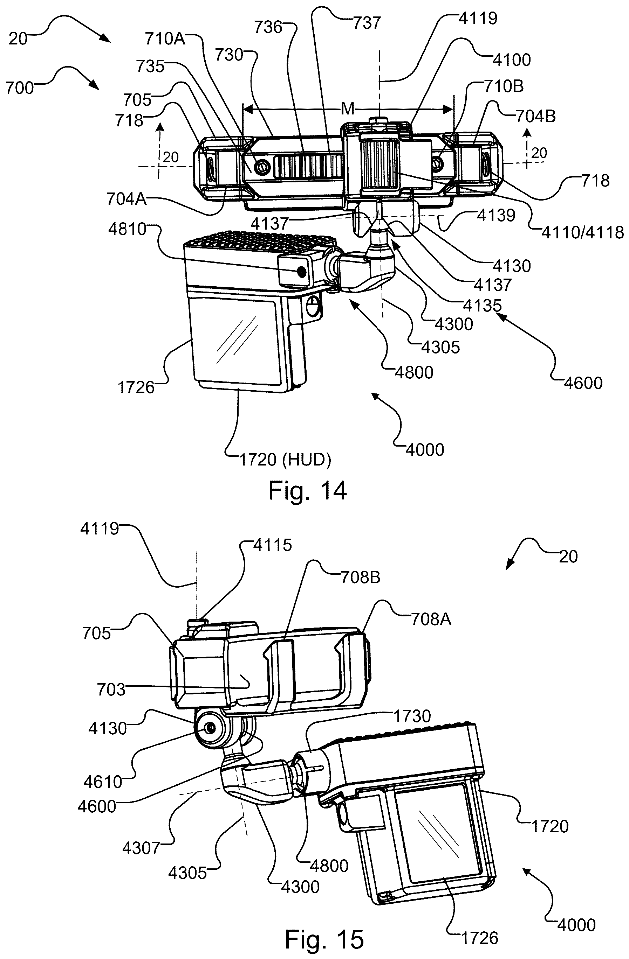

Referring, for example, to Figs. 14, 17, and 20A, a compressible member 718, e.g. 718A and 718B, is associated with each of the first safety release member 704A and the second safety release member 704B. The compressible members 718 may include springs or other elastically deformable elements positioned and configured to generate an urging force on the safety release members 704 to hold each safety release member 704 in a locked position wherein the second accessory rail 730, and in some arrangements the second accessory assembly 4000 attached to the second accessory rail 730, is held in place on the second rail carrier 705.

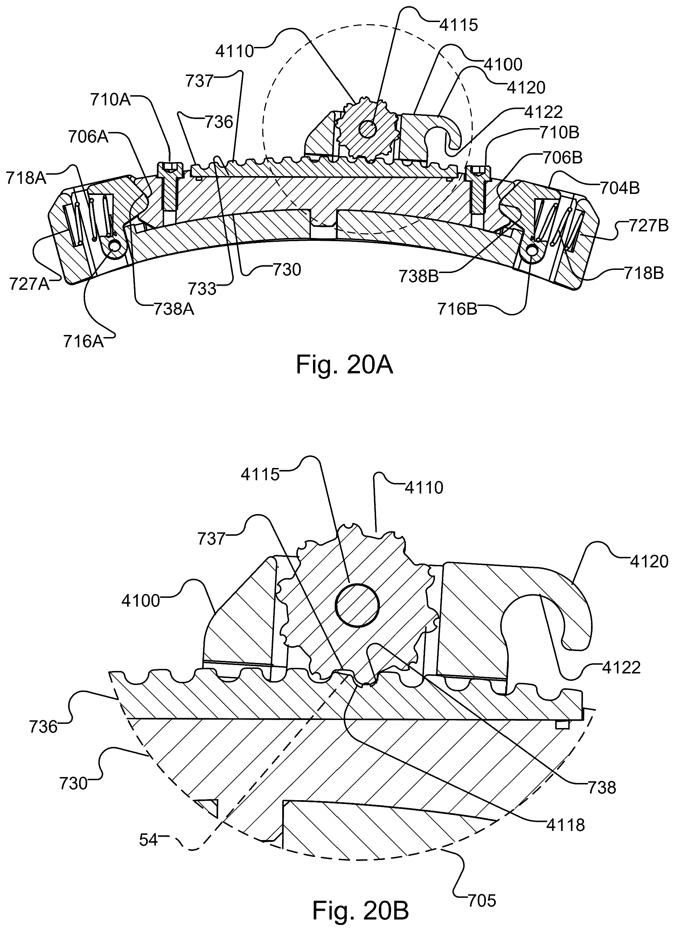

Fig. 20A is a top section view of the first rail mounting assembly 600, taken through section line 20 of Fig. 14. This view provides more detail for the left and right safety release members 704A and 704B and the compressible members 718. Also depicted are the left and right stops 710A, 710B. As may best be seen in Fig. 20A, in an embodiment, safety release members 704A and 704B are attached to the second rail carrier by pins 716A and 716B, respectively. The safety release members 704A and 704B may rotate around the pins 716A and 716B. The compressible members 718A and 718B are disposed between the safety release members 704A and 704B and corresponding receptacles 727A and 727B of the second rail carrier 705.

The compressible members 718A and 718B urge rail interface protrusions 706A and 706B of the safety release members 704A and 704B in mating contact with corresponding receptacles 738A and 738B of the second accessory rail 730 to hold the second accessory rail 730 on the second rail carrier 705. When the second accessory rail 730 is assembled onto the second rail carrier 705, the second accessory rail 730 tends to push on the safety release members 704A and 704B such that they rotate around the pins 716A and 716B to enable assembly of the second accessory rail 730 onto the second rail carrier 705 while compressing the compressible elements 718A and 718B. When the second accessory rail 730 is seated on the second rail carrier, the compressible elements 718A and 718B urge the safety release members 704A and 704B to rotate around the pins 716A and 716B towards the locked position illustrated, for example, in Fig. 20A.

Each safety release member 704A and 704B includes a rail interface 708A and 708B, respectively, for interfacing with corresponding receptacles 738A and 738B of the second accessory rail 730 to hold the second accessory rail 730 on the rail carrier 705. When the safety release member 704A and 704B are in the locked configuration, the rail interfaces 708A and 708B are engaged with the receptacles 738A and 738B of the second accessory rail 730.

When greater than a threshold amount of force is applied to the second accessory rail 730, a corresponding force may be imparted on the safety release members 704A and 704B through the interface of the receptacles 738A and 738B and the rail interfaces 708A and 708B. The corresponding force tends to cause the safety release members 704A and 704B to rotate around the pins 716A and 718B, overcoming the urging force provided by the compressible members 718A and 718B to disengage the rail interfaces 708A and 708B from the receptacles 738A and 738B to release the second accessory rail 730 from the second rail carrier 705.

The second accessory rail 730 may be disengaged from the second rail carrier 705 when a force having a magnitude greater than a threshold amount is applied to the second accessory assembly 4000 or to the second accessory rail 730. The threshold amount may be related to a spring constant of one or more springs comprising the compressible members 718. In one example, the threshold amount of force is equal to approximately 7 pounds, for example between 6 and 8 pounds, or between 4 and 10 pounds. In another example, the threshold amount of holding force has a range of 5 pounds to 20 pounds, and in a particular example is approximately 40 pounds. It will be recognized by one having skill in the art that the threshold amount of force required to dislodge the second accessory rail 730 from the second rail carrier 705 may be adjusted by replacing one or more of the first and second compressible members 718A, 718B, for example each having a first spring constant, with one or more second compressible members, for example each having a second spring constant.

### 5.1.2.2 Operation of an accessory assembly and attachment to a rail carrier

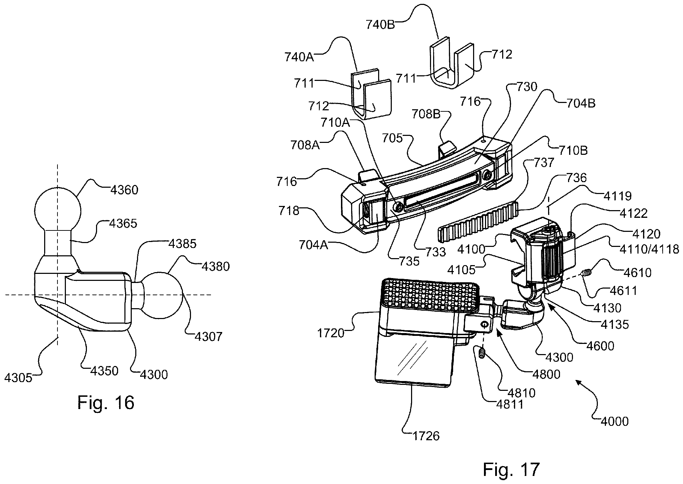

Referring now to Referring now to Figs. 12 through 18, the second accessory mounting system 20 includes a second adjustment frame 4100 that includes a channel 4105 for attaching the second adjustment frame 4100 to the second accessory rail 730. The second adjustment frame 4100 may function as an accessory rail connector for connecting the second accessory assembly 4000 to the second accessory rail 730. Referring, for example, to Figs. 12 and 17, the second adjustment frame 4100 may include a cable holder 4120 including a channel 4122 for holding a cable, wire, or the like. The cable 145 may be partially supported by the cable holder 4120, with a portion of the cable 145 disposed within the channel 4122.

The second adjustment frame 4100 may be attached to the accessory device 1720, or to another accessory device, by an arm 4300. As may best be seen in Fig. 16, the arm 4300 may include a body 4350, a proximal ball end 4360, and a distal ball end 4380. The proximal ball end 4360 is attached to the body 4350 by a distal ball post 4365 that extends from the body 4350 along a proximal ball axis 4305. The distal ball end 4380 is attached to the body 4350 by a distal ball post 4385 that extends from the body 4350 along a distal ball axis 4307. In an embodiment, the proximal ball axis 4305 and distal ball axis 4307 are substantially perpendicular to each other, i.e. the two the two axes intersect at a substantially 90 degree angle. In other embodiments, the proximal ball axis 4305 and distal ball axis 4307 may be disposed relative to each other at an angle greater than 90 degrees, for example between 90 and 100 degrees, or less than 90 degrees, for example between 80 degrees and 90 degrees.

The proximal ball end 4360 may be interfaced with the second adjustment frame 4100 to form a proximal ball joint 4600 therebetween. For this purpose, the second adjustment frame 4100 may include a proximal ball joint body 4130 having a proximal ball receptacle 4135 for receiving the proximal ball end 4360 (see Fig. 14). The proximal ball end 4360 may be assembled onto the second adjustment frame 4100 by press fitting the proximal ball end 4360 into the proximal ball receptacle 4135. The proximal ball joint body 4130 may include a longitudinal axis 4139 that is aligned substantially parallel to a length M of the second accessory rail 730 when the second adjustment frame 4100 is attached to the second accessory rail 730.

Referring to Figs. 12, 13, and 14, and with reference to directional axes 905, the proximal ball receptacle 4135 may face downwards from the second adjustment frame 4100, i.e. in a direction substantially perpendicular to a length M of the second carrier rail 730 and facing away from the helmet rim 209 when the second accessory mounting system 20 is assembled onto the helmet shell 205.

The proximal ball end 4360 of the arm 4300 and the proximal ball receptacle 4135 of the second adjustment frame 4130 may be assembled together to form the proximal ball joint 4600 that connects the arm 4300 to the second adjustment frame 4100. The proximal ball joint 4600 may enable relative movement between the second adjustment frame 4100 and the arm 4300 with up to three degrees of freedom, for example rotation and angular displacement of the proximal ball end 4360 and arm 4300 relative to the second adjustment frame 4100. The proximal ball receptacle 4135 may have angular walls 4137 to at least partially constrain motion of the proximal ball joint 4600 relative to the second adjustment frame 4100. In an example, the angular walls 4137 are disposed at an angle of approximately 60 degrees relative to each other.

The accessory device 1720 may include a ball receptacle 1730 for forming the distal ball joint 4800 with the distal ball end 4380 of the arm 4300. The distal ball end 4380 of the arm 4300 may be interfaced with the ball receptacle 1730 of the accessory device 1720 to form the distal ball joint 4800 therebetween. The distal ball end 4380 of the arm 4300 and the ball receptacle 1730 of the accessory device 1720 may be assembled together to form the distal ball joint 4800 that connects the arm 4300 to the accessory device 1720 and that enables relative movement therebetween, for example rotation and angular displacement of the distal ball end 4380 and the accessory device 1720 relative to the arm 4300 having up to three degrees of freedom.

As may best be seen in Figs. 14, 15, and 17, a proximal resistance adjustor 4610 may be associated with the proximal ball joint 4600 and a distal resistance adjustor 4810 may be associated with the distal ball joint 4800. The proximal and distal resistance adjustors 4610, 4810 may each interface with a corresponding ball end 4360, 4380, respectively of the arm 4300 to impart resistance to motion on the corresponding ball joint (4600, 4800, respectively). For example, the proximal resistance adjustor 4610 may include an adjustable member, for example a threaded member such as a set screw or the like, that may be tightened or loosened to adjust a level of resistance imparted by the proximal resistance adjustor 4610 on movement of the proximal ball end 4360 relative to the proximal ball receptacle 4135 at the proximal ball joint 4600. In a similar manner, the distal resistance adjustor 4810 may include an adjustable member, for example a threaded member such as a set screw or the like, that may be tightened or loosened to adjust a level of resistance imparted by the distal resistance adjustor 4810 on movement of the distal ball end 4380 relative to the distal ball receptacle 1730 at the distal ball joint 4800.

In an embodiment, the proximal resistance adjustor 4610 includes a set screw with a deformable tip 4611, for example a plastic tip or with a rubber tip, wherein the plastic or rubber tip can be pushed against the proximal ball end 4360 to increase resistance to motion by tightening the set screw and the plastic or rubber tip can be moved away from the proximal ball end 4360 to reduce resistance to motion by loosening the set screw. The distal resistance adjustor 4810 may be substantially similar to the proximal resistance adjustor 4610, e.g., the distal resistance adjustor 4810 may include deformable tip 4811 and may be operated in a similar manner.

A position of each of the proximal and distal resistance adjustors 4610, 4810 can be factory pre-set to enable a desired resistance to motion at the proximal and distal ball joints 4600, 4800. For example, the resistance to motion at the proximal ball joint 4600 and at the distal ball joint 4800 can be preset to a level, with the proximal and distal resistance adjustors 4610 and 4810, such that a user can move the arm 4300 relative to the adjustment frame 4100 and the accessory device 1720 relative to the arm 4300 to position the accessory device 1720 in a desired position, following which the accessory device 1720 will remain in the desired position until the user further adjusts its location or tilt angle. The proximal and distal resistance adjustors 4610, 4810 can be adjusted in the field, for example by loosening or tightening a set screw comprising a resistance adjustor. This enables a number of advantages, allowing a user to set a desired level of resistance to motion and to alter the level of resistance, or return it to a previous set point, for example to adjust for wear in a plastic or rubber tip 4611, 4811 of a resistance adjustor. A user may also remove and replace either or both of the proximal and distal resistance adjustors 4610 and 4810.

### 5.1.2.3 Rail gear rack and adjustment frame locking knob

Referring now to Figs. 12 -14, 17, 18, 20A, and 20B, the second accessory rail 730 includes a front, outward facing, surface 735 facing outward from the helmet shell 205 when the second accessory mounting system 20 is attached to the helmet shell 205. A first adjustment frame stop 710A and a second adjustment frame stop 710B protrude outwardly from the front surface 735 of the second accessory rail 730. The second adjustment frame 4100, when assembled on the second accessory rail 730, may be disposed between the first and second adjustment frame stops 710A, 710B. The first and second adjustment frame stops 710A and 710B may limit travel of the second adjustment frame 4100 relative to the second accessory rail 730 to a portion of the axial length M of the second accessory rail 730 that is disposed between the first adjustment frame stop 710A and the second adjustment frame stop 710B.

The second accessory rail 730 has a front surface 735. The front surface 735 faces outward from the second accessory rail 730 when the second rail carrier 705 is assembled onto the helmet shell 205 and the second accessory rail 730 is coupled to the second rail carrier 705. The front surface 735 is opposed to a rear surface of the second accessory rail 730, wherein the rear surface faces the second rail carrier 705 when the second accessory rail 730 is coupled to the second rail carrier 705.

A rail gear rack 736 is disposed on the front surface 735 of the of the second accessory rail 730. The rail gear rack 736 includes a linear array of gear teeth formed as protrusions 737 extending outward from the front surface 735 of the second accessory rail 730. In an embodiment, the protrusions 737 of the rail gear rack 736 extend vertically from the front surface 735 of the second accessory rail 730, for example in a direction substantially perpendicular to an axial length M of the second accessory rail 730. In an embodiment, the rail gear rack 736 extends along the axial length M of the second accessory rail 730 across a portion of an outward facing surface 735 of the second accessory rail 730, for example a portion disposed between the first adjustment frame stop 710A and the second adjustment frame stop 710B.

In an embodiment, the rail gear rack 736 and gear teeth/protrusions 737 may be formed as an insert that may be assembled into a gear rack cavity 733 formed in the front surface 735 of the second accessory rail 730. The rail gear rack 736 may be formed from a compliant material and the gear teeth formed as protrusions 737 therefrom may be deformable. For example, the rail gear rack 736 may be formed from a rubber or rubber-like material, or from a plastic material. In at least one embodiment, the second gear rack is formed from a compliant rubber material having a hardness at standard operating temperatures, for example at room temperature, of approximately 90 durometer.

The rail gear rack 736 may be attached to the second accessory rail 730 with an adhesive bonding agent or using another fastening method, for example a mechanical attachment using one or more fasteners or with an interference fit between the rail gear rack 736 and the second accessory rail 730. Alternatively, the rail gear rack 736 may be formed on an attached to the second accessory rail 730 using an overmolding process. In other embodiments, the rail gear rack 736 may be formed as a portion of the second accessory rail 730.

The second adjustment frame 4100 has a rail interface 4105 formed as a channel that is designed to interface with and slide onto the second accessory rail 730. The channel of the rail interface 4105 is adapted to have an inner contour shaped to mate with an outer contour of the accessory rail 730. In the illustrated example, the channel of the rail interface 4105 is substantially C-shaped.

The second adjustment frame 4100 includes a locking knob 4110 that is rotatably attached to the second adjustment frame 4100. The locking knob 4110 may be rotatably attached to the second adjustment frame 4100 by a locking knob pin 4115 that is disposed along a locking knob axis 4119. The locking knob 4110 is rotatable around the locking knob axis 4119 which extends along an axial length of the locking knob 4110. The locking knob axis 4119 may be substantially perpendicular to the axial length M of the second accessory rail 730 when the second adjustment frame 4100 is assembled onto the second accessory rail 730 and is disposed substantially parallel to the outward facing surface 735 of the second accessory rail 730, and substantially parallel to the protrusions 737 of the rail gear rack 736 when the second adjustment frame 4100 is assembled onto the second accessory rail 730.

The locking knob 4110 may include a circular array of locking knob gear teeth 4118, formed as protrusions extending radially outward relative to the locking knob axis 4119. The locking knob gear teeth 4118 may be exposed on a surface of the channel of the rail interface 4105. When the second adjustment frame 4100 is assembled onto the second accessory rail 730, one or more of the locking knob gear teeth 4118 may be disposed substantially parallel to the protrusions 737 of the rail gear rack 736 and may interact with one or more of the protrusions 737 and interface with one or more gear tooth recesses 738, each recess 738 formed between two protrusions 727 (see Fig. 20B). The one or more locking knob gear teeth 4118 may be interfaced with the one or more protrusions 737 of the rail gear rack 736 such that when a user rotates the locking knob 4110 around to locking knob axis 4119, the locking knob gear teeth 4118 interact with the one or more protrusions 737 of the rail gear rack 736 to move the adjustment frame along the axial length M of the second accessory rail 730.

In some embodiments, the locking knob gear teeth 4118 and the protrusions 737 of the rail gear rack 736 are each made from a rigid material, for example from a plastic or metal material, for example from aluminum, and aluminum alloy, or from an injection molded, machined, or rapid prototyped plastic material.

In other embodiments, one or more of the locking knob gear teeth 4118 and protrusions 737 of the rail gear rack 736 may be formed from a deformable material, for example from a rubber material. In some embodiments, the rubber material may have a hardness substantially similar to a hardness of an automobile tire, for example a durometer of approximately 90 when measured using a standard harness testing method.

In at least one embodiment, the locking knob gear teeth 4118 are formed from a rigid material, for example a metal or metal alloy, for example aluminum or an aluminum alloy, and the protrusions 737 of the rail gear rack 736 are formed from a compliant material, for example the rail gear rack 736 may be formed as a deformable insert having compliant protrusions. The deformable insert 736 may be assembled onto or formed on the second accessory rail 730, as previously discussed.

The locking knob gear teeth 4118 and the rail gear rack 736 may be formed and sized so that they interface with each other with an interference fit, for example as indicated by reference 54 in Fig. 20B. The interference fit between the rigid locking knob gear teeth 4118 and the compliant protrusions 737 of the rail gear rack 736 enables the locking knob 4110 to form a releasable locking interface with the compliant gear rack 736. The releasable locking interface holds the adjustment frame 4100 in a particular position along the length M of the second accessory rail 730, for example in a position selected by a user.

The user may release the locking interface by rotating the locking knob 4110 around the locking knob axis 4119 to, for example, move the second adjustment frame 4100 along the axial length M of the second accessory rail 730. The releasable locking interface between the compliant protrusions 737 of the deformable gear rack 736 and the locking knob gear teeth 4118 may be released by pulling the adjustment frame 4100 along the axial length M of the second accessory rail 730 using more than a threshold amount of force, for example greater than or equal to approximately 5 pounds of force. A user may thus move the adjustment frame 4100, and the second accessory assembly 4000 with the accessory device 1720 attached thereto, relative to the second accessory rail 730 either by actuating the locking knob 4110 or by pulling or pushing on a portion of the third accessory assembly 4000.

Referring now to Figs. 9, 10, and 12 through 21B, in a manner similar to that described in relation to the first ball joint 3600 and second ball joint 3800 of the first accessory assembly 3000 (see Figs. 9 and 10), the proximal ball joint 4600 and distal ball joint 4800 of the second accessory assembly 4000 each enable motion having three degrees of freedom. In particular, the proximal ball joint 3600 enables three degrees of motion between the second adjustment frame 4100 and the arm 4300 and the distal ball joint 3800 enables three degrees of freedom between the arm 4300 and the second accessory device 1720. Linear motion of the second adjustment frame 4100 relative to and along the second accessory rail 730 provides the second accessory mounting system 20 with an additional degree of freedom for positioning the second accessory device 1720.

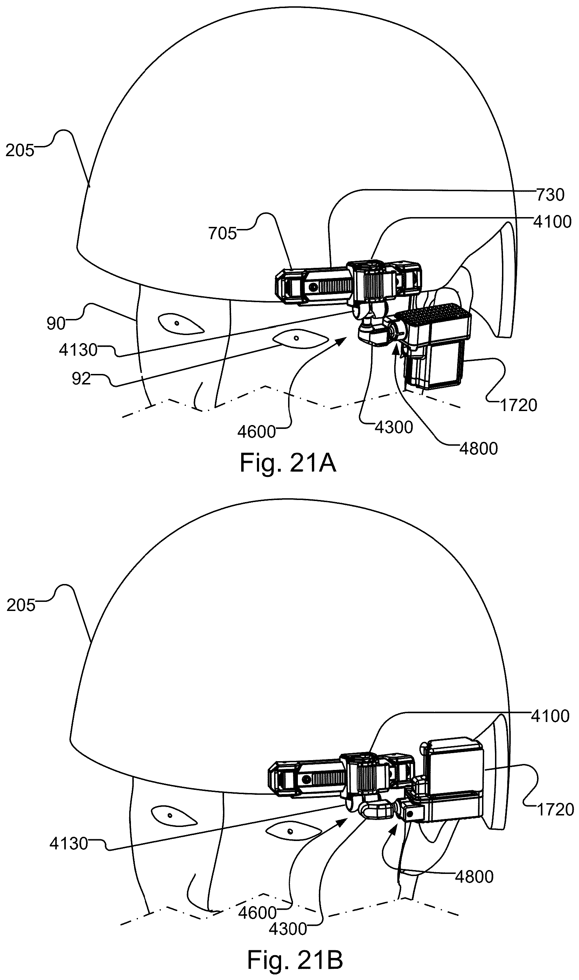

Referring now to Figs. 12, 21A, and 21B, the second accessory mounting system 20 advantageously enables the accessory device 1720 to be positioned and repositioned by a user in multiple locations and attitudes. For example, the second accessory device 1720 may be positioned in front of a user's eye 92, as shown in Fig. 12. Referring to Fig. 21A, the second accessory device 1720 may be moved out of a line of sight of a user by rotating the arm 4300 relative to the second adjustment frame 4100, for example around the proximal ball axis 4305 (see Figs 15 and 16). Referring to Fig. 21B, the second accessory device 1720 may be positioned in a stowed position by further rotating the arm 4300 around the longitudinal axis 4139 of the proximal ball joint body 4130 and rotating the second accessory device 1720 around the distal ball axis 4800 (see Figs. 14 - 16).

### 5.1.2.4 Assembly onto a helmet

The second accessory mounting system 20 may be attached to the helmet by assembling the second rail carrier 705 over an edge or rim 209 of the helmet shell 205, as may be seen for example in Figs. 12, 13, 19A, and 19B. Assembly of the second rail carrier 705 onto the helmet shell 205 is indicated by reference 36.

Referring now to Figs. 12 through 19B, the second rail carrier 705 includes features that enable assembly of the second accessory mounting system 20 onto the helmet shell 205, over an edge or rim 209 of the helmet shell 205. In some embodiments, the second accessory mounting system 20 may advantageously be assembled on to the helmet shell 205 without tools.

As depicted, for example, in Figs. 15, 17, and 18, the second rail carrier 705 includes an exterior facing surface 703, a rim interface surface 709, and one or more, for example two, interior interfaces 708, for example 708A and 708B. The exterior facing surface 703 is a vertical surface disposed to interface with an exterior surface 207 of the helmet shell 205 when the second rail carrier 705 is assembled onto the helmet shell.

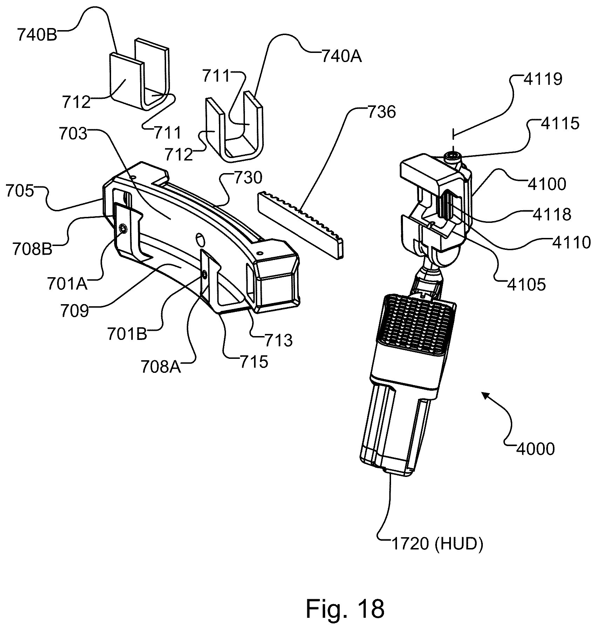

As may best be seen in Fig. 18, the rim interface surface 709 includes a proximal end 713 that is attached to the exterior facing surface and extends laterally inward (relative to the helmet shell 205) from the exterior facing surface 703. The rim interface surface 709 is sized and disposed to extend across and to interface with the helmet rim 209 when the second rail carrier 705 is assembled onto the helmet shell 205. Each interior interface 708 extends upward from a distal end 715 of the rim interface surface 709, the distal end 715 opposing the proximal end 713. In illustrated embodiments, the second carrier body includes two interior interfaces 708A and 708B. However, the technology described herein is not so limited. In examples, the second carrier body 705 may include one, two, or more interior interfaces 708.

In an example embodiment, one or more of the interior interfaces 708 may include a fixing member 701 (see Fig. 18), for example a set screw or the like. A fixing member 701 may include a threaded fastener, for example a set screw, or an actuated fixing member, for example a ball detent, or any other suitable structure for interfacing with the helmet shell 205. In other embodiments, for example in embodiments that may be attached to the helmet shell 205 without tools (see, for example, Figs. 13, 15, and 19A-19B) the interior interfaces 708, e.g., 708A and 708B) do not include a fixing member.

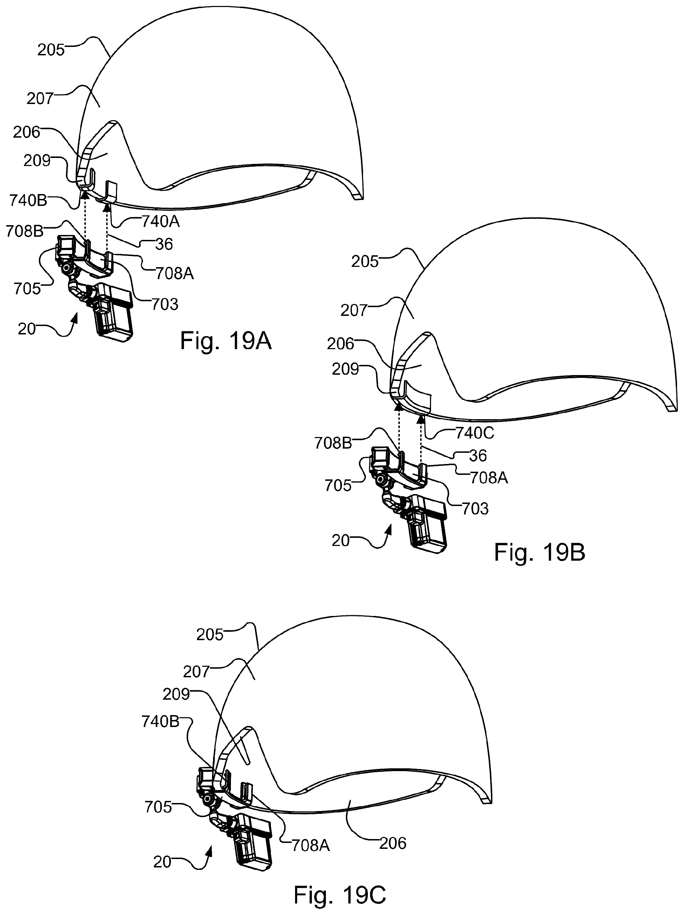

Referring now to Figs. 13, 19A, and 19B, the second rail carrier 705 may be assembled onto the helmet shell 205 by sliding it over a portion of the rim 209 of the helmet shell 205 such that the exterior facing surface 703 of the second rail carrier 705 faces or is in contact with an exterior surface 207 of the helmet 205, the rim interface surface 709 faces or is in contact with a portion of the rim 209 of the helmet shell 205, and the one or more interior interfaces 708, e.g., 708A and 708B are disposed in contact with an inner surface 206 of the helmet shell 205.

When the second rail carrier 705 is assembled over the rim 209 of the helmet shell 205, the one or more interior interfaces 708 may come into contact with an inner surface 206 of the helmet shell 205. When the second rail carrier 705 is assembled over the rim 209 of the helmet shell 205, one or more locking members, for example one or more fixing members 701 each disposed on an interior interface 708 (see Fig. 18), may be tightened to hold the accessory in place and to prevent the second rail carrier 705 from being dislodged from the helmet shell 205.

In some embodiments, the second rail carrier 705 may advantageously be assembled onto the helmet shell 205 without the use of tools. For example, an interference fit between the second rail carrier 705 and the helmet shell 205 may provide sufficient resistance to dislodgement of the second rail carrier 705 from the helmet shell 205 to enable the second rail carrier 705 to be retained on the helmet shell 205 through normal use of the second accessory mounting system 20 and when force sufficient to dislodge the second carrier rail 730 from the second rail carrier 705 is applied.

Referring now to Figs. 17, 18, 19A, 19B, and 19C, in some example embodiments, one or more compliant interface members 740, for example 740A and 740B, may be disposed between the second rail carrier 705 and the helmet shell 205. For example, and referring to Figs. 19A and 19B, the one or more compliant interface members 740A, 740B, and 740C may be assembled over the rim 209 of the helmet shell 205 prior to assembling the second rail carrier 705 onto the helmet shell 205. A compliant interface member 740 may extend over a portion of the inner surface 206 and outer surface 207 in addition to spanning a width of the rim 209 of the helmet shell 205.A compliant interface member 740 may be formed from a rubber or rubber-like material or from another deformable material, for example from an elastically deformable material.

In some embodiments two compliant members, for example 740A and 740B (see Fig. 19A) are assembled over a portion of the helmet rim 209, each disposed in a location corresponding to a desired placement of one of the interior interfaces 708A and 708B of the second rail carrier 705. In other embodiments a single compliant member 740, for example 740C (see Fig. 19B), may be assembled onto the helmet rim 209, for example covering a span of the helmet rim 209 corresponding the dimensions of the interior facing surface 703 of the second rail carrier 705 or to a span of the helmet rim 209 corresponding to the one or more interior interfaces, e.g., 708A and 708B.

Any number of compliant interface members 740 may be used and the second rail carrier 705 may include less than or more than two interior interfaces 708, for example one interior interface, three, or four interior interfaces. In some embodiments, the one or more compliant interface members 740 are disposed to cover a portion of the helmet rim 209 associated with each of the one or more interior interfaces 708 of the second rail carrier 705.

The one or more compliant interface members 740, for example 740A and 740B, may include an inner adhesive layer 711 disposed on a first, helmet facing, surface to attach each of the one or more compliant interface members 740 to the helmet shell 205. In some embodiments, the one or more compliant interface members 740 may include an outer adhesive layer 712 disposed on a second, outward facing, surface, the second surface opposing the first surface across a thickness of the compliant interface member 740, to attach the compliant interface members 740 to the second rail carrier 705. In some embodiments, the one or more compliant members 740 may include in inner adhesive layer 711 and an outer adhesive layer 711. For example, the one or more compliant interface members 740 may be formed from double sided adhesive rubber material.

In some embodiments, the one or more compliant interface members 740 are sized to form and interference fit between the helmet shell 205, the one or more compliant interface members 740, and the second rail carrier 705. For example, a compliant interface member 740 may have an undeformed thickness that is smaller than a gap between one or more helmet-facing surfaces of the second rail carrier 705 and one or more surfaces of the helmet shell 205 when the second rail carrier is assembled onto the helmet shell. The one or more compliant interface members 740 may be elastically deformed when the second rail carrier 705 is assembled onto the helmet shell 205 over the compliant interface members 740. The one or more compliant interface members 740 may resist compression imparted by the interference fit to exert an expansion force between the compliant interface member 740, one or more surfaces of the helmet shell 205, and one or more surfaces of the second rail carrier 705, for example the interior facing surface 703, the rim facing surface 709, and the one or more interior interfaces 708. The expansion force enabled by the interference fit may hold the second rail carrier 705 on the helmet shell 105.

Alternatively, or in addition, adhesive bonding of the one or more compliant interface members 740 to the second rail carrier 705 and to the helmet shell 205 maintains the second rail carrier 705 on the helmet shell 205. The second rail carrier 705 may be retained on the helmet shell 205 by a one or more of an interference fit and adhesive bonding between the second rail carrier 705, the one or more compliant interface members 740, and one or more surfaces (e.g., outer surface 207, brim 209, and/or inner surface 206) of the helmet shell 205. In some embodiments, the second rail carrier may be retained on the helmet shell 205 by: 1) an interference fit; 2) an interference fit combined with adhesive bonding; or 3) adhesive bonding alone. For example, the second rail carrier 205 may be retained on the helmet shell 205 under normal operating conditions and when more than the breakaway amount of force required to dislodge the second accessory rail 730 from the second rail carrier 705 is applied to one or more components of the second accessory mounting system 20.

In some examples, the compliant interface members 740 may be optional, and the second rail carrier 705 may be assembled onto the helmet rim 209 without a compliant member (e.g., 740A, 740B) disposed between the second rail carrier 705 and the helmet shell. In this example, the second rail carrier 705 may be maintained on the helmet shell 205 by an interference fit between the two.

In further examples, the second rail carrier 705 may include one or more fixing members 701 (for example, and referring to Fig. 18, fixing members 701A and 701B) disposed on one or more of the interior interfaces 708, for example first and second interior interfaces 708A and 708B. When the second rail carrier 705 is assembled over the rim 209 of the helmet shell 205, the one or more fixing members 701 may be tightened to help hold the second rail carrier 705 on the helmet shell 205.

The second rail carrier 705 may be semi-permanently attached to the helmet shell 205 using any of the methods described herein. When the second rail 705 carrier is semi-permanently attached to the helmet shell 205, the second rail carrier 705 remains attached to the helmet shell 205 under normal use of the accessory mounting system 20, for example when a user attaches and detaches the second accessory rail 730 and accessory assembly 4000 to and from the second rail carrier 705, when the second accessory rail 730 is dislodged from the second rail carrier 705 due to a greater than threshold amount of force being applied to the second accessory rail 730, and when a user positions and re-positions the accessory 1720. The second rail carrier 705 may be attached to the helmet shell 205 with one or more of: an interference fit between the second rail carrier 705 and the helmet shell 205; an interferences fit including one or more compliant interface members 740 disposed between the second rail carrier 705 and the helmet shell 205; adhesive bonding between a compliant member 740 and one or more of the second rail carrier 705 and the helmet shell 205; and mechanical fixing of the second rail carrier 705 to the helmet shell using one or more fixing members 701.

When the second rail carrier 705 is attached to the helmet shell 205 with any of the attachments described herein, the second rail carrier 705 may remain attached to the helmet shell 205 under operating conditions of the second accessory mounting system 20. However, the second rail carrier 705 may be removable from the helmet shell 205, for example using a tool to remove the second rail carrier 705 from the helmet rim 209, for example by loosening the one or fixing members 701, if present, or by prying the second rail carrier 705 from the helmet shell, for example to overcome a holding force provided by an interference fit or adhesive bond that holds the second rail carrier 705 on the helmet shell 205.

Referring now to Figs. 12, 13, and 19A - 19C, a method of attaching the second accessory mounting system 20, including an accessory device 1720, to a helmet shell 205 includes providing a second rail carrier 705 having a safety release mechanism for holding an accessory rail on the rail carrier 705. The safety release mechanism may include one or more safety release members 704 (for example, safety release members 704A and 704B).

The method may include attaching the second rail carrier 705 to the helmet shell 205, for example by assembling the second rail carrier 705 over a rim 209 of the helmet shell, as indicated, for example, by reference 36 in Figs. 13, 19A, and 19B. The method may optionally include disposing one or more compliant interface members 740 between the second rail carrier and the helmet shell 205, as described elsewhere herein. The method may optionally include adhesively bonding the one or more compliant interface members 740 to one or more of the helmet shell 205 and the rail carrier 705.

The method may further include providing a second accessory rail 730 and an accessory assembly 4000, including an adjustment frame 4100 and an accessory device 1720 attached to the adjustment frame. The adjustment frame may 4100 be assembled onto the accessory rail 730 to attach the accessory assembly 4000 to the accessory rail 730.

The method may include attaching the accessory rail 730 to the rail carrier 705, as indicated by reference 38 in Fig. 13, wherein the accessory rail 730 is releasably coupled to the rail carrier 705 by the safety release mechanism that includes the safety release members 704, thereby attaching the accessory assembly 4000, including the accessory device 1720, to the helmet shell 205.

### WRAP up section

Aspects of technology and described in the disclosure, for example operations of RCMs 150 and of HUD devices 1700 and HUD control interfaces 130 and 135 may be implemented, at least in part, in hardware, software, firmware or any combination thereof. For example, various aspects of the described technology may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

It will also be recognized by those skilled in the art that, while the invention has been described above in terms of preferred embodiments, it is not limited thereto. Various features and aspects of the above-described invention may be used individually or jointly. Further, although the invention has been described in the context of its implementation in a particular environment, and for particular applications (e.g. for mounting and positioning HUD devices), those skilled in the art will recognize that its usefulness is not limited thereto and that the present invention can be beneficially utilized in any number of environments and implementations where it is desirable to mount various types of display devices and/or imaging devices to head wearable structures such as helmets or the like. Accordingly, the claims set forth below should be construed in view of the full breadth and spirit of the invention as disclosed herein. That said the claims and the elements therein as well as features above, can be reorganized, parsed, separated and combined in any combination to present claims to the inventive subject matter disclosed herein.

## Claims

1. A helmet mounting system comprising:
a rail carrier configured to clip onto a rim of a helmet and remain semi-permanently attached thereto;
a rail configured to be releasably coupled to the rail carrier, the coupling including a safety release mechanism that disengages the rail from the rail carrier when a force applied to the rail exceeds a threshold amount;
an adjustment frame slidably disposed along the rail, the adjustment frame including a locking knob having protrusions that engage with compliant protrusions of a deformable insert disposed along the rail to selectively secure the adjustment frame in a position; and
a display device having a viewing screen coupled to the adjustment frame, the display device positionable to dispose the viewing screen in front of a user's eye.

2. The helmet mounting system of claim 1, further comprising an arm coupled to the adjustment frame via a ball joint and further coupled to the display device via another ball joint, the arm being positionable to locate the viewing device in front of the user's eye or in a stowed position outside of the user's line of sight.

3. The helmet mounting system of claim 2 wherein the ball joints each include a resistance adjustor to constrain motion of the ball joint for maintaining the HUD device in a user-selected position.

4. The helmet mounting system of claim 1, wherein the locking knob protrusions disengage from the compliant protrusions of the deformable insert when the locking knob is actuated by a user or when a greater than a threshold amount of force is applied to the adjustment frame or to the display device.

5. The helmet mounting system of claim 1, wherein the adjustment frame is configured to slide along the rail when the user operates the locking knob.

6. The helmet mounting system of claim 1, wherein the rail carrier is configured to clip onto the rim of the helmet without tools.

7. The helmet mounting system of claim 6, further including a deformable member disposed between the rail carrier and the helmet, wherein the rail carrier is maintained on the helmet rim with an interference fit between the deformable element, the rail carrier, and the helmet.

8. The helmet mounting system of claim 7, wherein the deformable member includes at least one adhesive layer to adhere the deformable member to one or more of the helmet and the rail carrier.

9. The helmet mounting system of claim 1, wherein the rail includes a cavity for receiving the deformable insert and wherein the deformable insert is configured to be assembled into the cavity.

10. The helmet mounting system of claim 1, wherein the safety release mechanism comprises a first locking member disposed to releasably hold a first end of the rail and a second locking member disposed to releasably hold a second end of the rail.

11. The helmet mounting system of claim 10, wherein the safety release mechanism further includes a first compressible element for holding the first locking member in a locked position and a second compressible element for holding the second locking member a locked configuration, wherein when the first and second locking members are in the locked configuration, the accessory rail remains coupled to the rail until a force applied to the rail exceeds the threshold amount.

12. The helmet mounting system of claim 1, wherein the force applied to the rail is applied to the rail through an accessory assembly attached to the rail, the accessory assembly including the adjustment frame, the arm, and the viewing device.

13. A method for attaching a viewing device to a helmet comprising:
providing a rail carrier, the rail carrier attachable to the helmet, the rail carrier comprising a safety release mechanism for coupling a rail to the rail carrier and for disengaging the rail from the rail carrier when a force applied to the rail exceeds a threshold amount; and
providing a breakaway assembly including the rail and an accessory assembly, the accessory assembly including an adjustment frame attachable to the rail and slidable along the rail, the adjustment frame including a locking knob having protrusions that engage with protrusions disposed along the rail to selectively secure the adjustment frame in a position,
wherein the breakaway assembly is removably attachable to the to the rail carrier to attach the viewing device to the helmet.

14. The method of claim 13, further comprising providing the viewing device and an arm, the arm attachable to the adjustment frame at a first ball joint and attachable to the viewing device at a second ball joint for coupling the viewing device to the adjustment frame.

15. The method of claim 13, wherein the rail carrier is attachable to a rim of the helmet with an interference fit with the rim.
